# EUROPEAN PATENT SPECIFICATION

(11) **EP 3 299 149 B1**
(45) Date of publication and mention of the grant of the patent: **19.07.2023**
(21) Application number: 15892625.3
(22) Date of filing: 15.10.2015
(51) Int. Cl.: B29C 67/00, B33Y 10/00, B33Y 30/00, B41J 2/14, B41J 2/17, B29C 64/209, B29C 64/118

(54) **PRINTHEAD DISPENSING DEPOSITION MATERIAL AND METHOD OF FORMING PRINTED OBJECT**
DRUCKKOPF ZUR AUSGABE VON ABSCHEIDUNGSMATERIAL UND VERFAHREN ZUR HERSTELLUNG EINES GEDRUCKTEN OBJEKTS
TÊTE D'IMPRESSION À DISTRIBUTION DE MATÉRIAU DE DÉPÔT ET PROCÉDÉ DE FORMATION D'OBJET IMPRIMÉ

(30) Priority: 19.05.2015 JP 2015102185; 24.06.2015 JP 2015127059
(43) Date of publication of application: 28.03.2018
(73) Proprietor: Taniguchi, Hideo, Kyoto-shi Kyoto 615-8224 (JP)
(72) Inventor: TANIGUCHI, Hideo, Kyoto-shi Kyoto 600-8813 (JP); SUNADA, Shigemasa, Kyoto-shi Kyoto 600-8813 (JP); ODA, Kazuo, Kyoto-shi Kyoto 600-8813 (JP)
(74) Representative: Serjeants LLP
(86) International application number: PCT/JP2015/079183
(87) International publication number: WO 2016/185626

(56) References cited:
- EP-A2- 0 322 228
- WO-A1-2014/208741
- JP-A- 2004 255 614
- JP-A- 2005 041 219
- JP-A- 2005 104 135
- JP-A- 2005 104 135
- JP-A- 2013 067 035
- US-A- 5 340 433
- US-A1- 2008 030 554
- US-A1- 2015 130 101
- US-B1- 8 827 684

## Description

### TECHNICAL FIELD

The present invention relates to a printhead dispensing deposition material for discharging (dispensing) a deposition material in the case where a three-dimensional fabricated (formed) object is manufactured with a 3D printer and a fabrication (forming) method for three-dimensional fabrication. More specifically, the present invention relates to a printhead dispensing deposition material which can be manufactured at low cost and assures easy control of discharging of the deposition material and a method of forming.

### BACKGROUND ART

In recent years, manufacturing a three-dimensional fabricated object with a 3D printer using a computer has become popular. In such 3D printers, a three-dimensional model is expressed as a collection of sectional shapes. Thus, a 3D printer discharges a deposition material to a predetermined spot by three-dimensionally moving a nozzle which discharges a deposition material or by moving a table for the fabricated object in order to form a fabricated object. One example of materials for forming such fabricated object includes materials which are formed into a melted state by increasing its temperature such as thermoplastic resins and metals having a low melting point. Also, a photofabrication method, in which a light curing resin (such as ultraviolet-curing resin) is selectively cured by lighting, and an inkjet method, in which a light curing resin, a thermoplastic resin, a wax, and the like are discharged from an inkjet nozzle for laminate fabrication, are known. Also, a reaction type curing method, in which a base resin is discharged and subsequently a curative agent is discharged, is known. The above-mentioned thermally melting material is discharged to a predetermined spot by means of computer control, is solidified as the temperature drops, and a solid body is formed. Therefore, a three-dimensional fabricated object can be obtained by moving this discharge nozzle relatively in a three-dimensional space to discharge a deposition material.

As a device discharging such deposition material, for example, one having a configuration as shown in FIG. 17 is known (see, for example, Non Patent Document 1). Specifically, in FIG. 17, a nozzle 61 is screwed into one end side of a heater block 63, a barrel 62 is screwed onto the other end side, and a wire-shaped or stick-shaped deposition material is inserted to the barrel 62. Then, a deposition material is delivered from the barrel 62 at a constant rate, the deposition material is heated and melted by the heat of the heater block 63, and the melted deposition material is discharged at a fixed amount each time from a discharge opening 61a at a tip of the nozzle 61. The position of the discharge opening 61a is moved relatively in XYZ directions by means of computer control in such a way that it traces a desired three-dimensional drawing. From this, the melted deposition material is discharged to manufacture a fabricated object in a desired three-dimensional shape. There is a heater, which is not illustrated, provided around this heater block 63 for heating the heater block 63 to a predetermined temperature so that the deposition material is melted.

On the other hand, in the inkjet method which is mainly used to form a two-dimensional image, ink drops (droplets) are discharged from a plurality of nozzles to perform image formation on a predetermined recording medium. In this recording head, pressure variation is caused by a piezoelectric device in a pressure chamber communicating with a nozzle by an actuator so that an ink droplet is discharged from a nozzle opening. Also, a method of thermal inkjet is known, in which a heater (a heating element) is disposed at the bottom of a nozzle, local heating by the heater causes bubbling of ink, the ink is boiled due to bubble coalescence thereof, and then the ink is discharged (see pages 7 to 9, and 35 of Non Patent Document 2).

Document US 2008/0030554 A1 discloses a liquid transporting apparatus within an ink-jet printer.

### PRIOR ART DOCUMENT

### Non Patent Document

Non-Patent Document 1: "Digital Art of Design and Manufacturing by 3D Printer" (written by Kazuo Kadota, issued by NIKKAN KOGYO SHIMBUN, LTD., 103 Pages)
Non-Patent Document 2: "Ink Jet" (issued by The Imaging Society of Japan on September 10, 2008)

### SUMMARY OF THE INVENTION

### PROBLEM TO BE SOLVED BY THE INVENTION

As mentioned above, in the configuration where the cylindrical nozzle 61 and the barrel 62 are manufactured and fixed to the heater block 63, there is a problem with increase in material cost and manufacturing cost. In addition, one through-hole needs to be provided and a screw hole needs to be made in each heater block 63, and thus there is also a problem that the entire body of the discharge device including the heater blocks becomes large. Furthermore, because the deposition material is heated from the outside of the heater block 63 by a heater, the heating is indirect and the heat efficiency is not good.

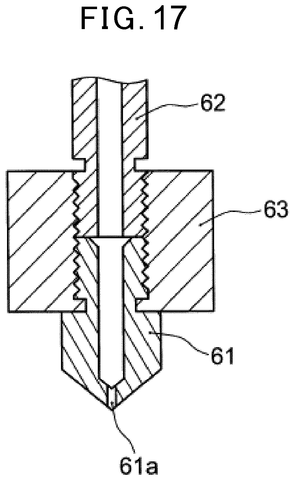

In addition, as shown in FIG. 17, when the discharge (dispense) opening 61a is away from the heater block 63, it is likely that there arises a problem that, before the deposition material is discharged to a desirable spot, the melted deposition material becomes solidified at the tip of the nozzle 61. Besides, once the deposition material becomes solidified, in order to raise the temperature of the tip of the nozzle 61, the heater block 63 needs to be heated to an excessively high temperature. However, when the temperature of the heater block 63 itself becomes higher than the melting point of the deposition material, there is a problem that a filament, a linear or rod-shaped deposition material introduced to the barrel 62 side, is melted and cannot be pushed out in a fixed amount. Also, in case of some materials, including a polylactic resin (PLA), when a temperature thereof is elevated, they become recrystallized and carbonized under a certain condition, and once they are solidified, there is a case where they are not brought to a melted state even if the temperature is elevated again. For such materials, the nozzle 61 needs to be discarded and replaced with new one. Consequently, the nozzle 61, which is high in manufacturing cost, is wasted, which results in a problem with further increase in cost. Also, as a starting material of the deposition material, a semi-elastic, wire-shaped material having a circular section of 1.75 mm diameter or 3.5 mm diameter and being wound around a reel has been used. Therefore, the filament wound around the reel becomes bulky, and space efficiency is reduced. Although a material is not widely different in volume from a material shaped in a flat tape, it requires a larger space for storage. However, there is a problem that a material shaped in a flat tape cannot be used because it has a larger width and does not fit in the barrel 62 or the nozzle 61.

Also, in the above-mentioned method employing an ink jet piezo-electric element, a deposition material is not discharged continuously but is discharged for each of small areas. However, this method employing the piezo-electric element can be applied only to a deposition material having a relatively low viscosity. Also, a pressure variation (a volume variation) by the piezo-electric element is small, and a large amount of a deposition material cannot be discharged at a time. Therefore, a large amount of the discharged deposition material cannot be stacked up. As a result, the method can manufacture a small fabricated (formed) object; however, it is not good at fabricating a large fabricated object. Also, in a thermal system, in which a heater is arranged, a deposition material having a high viscosity such as one which is a fluid but not a liquid cannot be boiled. In other words, there is a problem that the thermal system cannot be applied to a high-viscosity deposition material. Therefore, as mentioned above, a method, in which a deposition material is continuously discharged from a nozzle, has been used generally. A fabricated object cannot be manufactured by discharging a high-viscosity deposition material in an amount needed for each specific spot while relatively scanning either a nozzle or a fabrication (forming) table. As a result, there is a problem that a large fabricated object cannot be manufactured in a short time.

Thus, there is a problem that a high-viscosity deposition material cannot be constantly discharged by a predetermined amount. Consequently, it takes time to manufacture a large-size fabricated object, and a large-sized fabricated object is expected to be manufactured in a short time.

The present invention has been made to solve these problems and an object thereof is to provide a printhead having an improved thermal efficiency, wherein at least a part of a flow path for a deposition material is formed by a part of a heating plate so that the deposition material is heated directly by the heating plate.

Other object of the present invention is to provide a printhead dispensing deposition material having a flow path structure body which can be manufactured easily without using a cylindrical, thread-cut, and thus expensive nozzle but with low-cost materials such as a plate material, and a method of forming therewith.

Another object of the present invention is to solve a problem that the melted deposition material at the discharge opening becomes more viscous and is less fluidized or is solidified and thus unable to be discharged, by allowing the temperature of a flow path, in which a deposition material is melted and flowed, to be higher at a discharge opening side than that at a deposition material supply opening side.

Another object of the present invention is to provide a printhead dispensing deposition material having a configuration which allows a discharge part to be dismantled so that a solidified deposition material can be removed in the case where the deposition material is one which is solidified after once being melted and is unable to be re-melted by elevating a temperature thereof.

Another object of the present invention is to provide a printhead dispensing deposition material having a discharge configuration in which even a high-viscosity material such as one which is a fluid but not a liquid can be discharged to a predetermined spot in a predetermined amount and a fabricated object can be manufactured in a short time while scanning either a discharge opening or a fabrication table.

Another object of the present invention is to provide a printhead dispensing deposition material and a method of forming of a three-dimensional fabricated object, in which discharge openings are formed in line and/or in a plurality of rows so that even a fabricated object comprising materials with different colors and materials with different melting points or the like can be formed in the same layer by a single scan and at the same time a fabricated object of multiple layers can be manufactured by a single scan.

Another object of the present invention is to provide a printhead dispensing deposition material and a method of forming in which, when any of a melting deposition material, an ultraviolet-curable deposition material, or a two-liquid mixing resin material of a base resin and a curing agent is used for fabrication or when those types are used together for fabrication, a fabricated object can be reliably manufactured by continuously discharging different resins at the same spot.

### MEANS TO SOLVE THE PROBLEM

The printhead dispensing deposition material for three-dimensional fabrication of the present invention, according to claim 1, comprises a first heating plate constituting a first side wall portion being a part of a side wall of a flow path for flowing a deposition material , and heating the deposition material in the flow path; a closing plate or a second heating plate constituting a second side wall portion, the second side wall portion being a part of the side wall of the flow path other than the first side wall portion; a discharge opening communicating with the flow paths and formed on one tip of the flow path; and a material supply opening communicating with the flow path and formed on the other tip of the flow path.

Here, the first side wall portion and the second side wall portion respectively indicate portions of the side wall constituting the flow paths, and do not necessarily indicate, for example, one or two sides of a rectangular shape and mean a part of a peripheral wall, such as a part of an arch of a circular shape. The peripheral wall may be constituted of the first side wall portion and the second side wall portion, and may also be composed of those portions and a third side wall portion.

According to claim 1, the printhead dispensing deposition material further includes a flow path structure body, the flow path structure body comprising a plurality of plates having a through-hole of almost the same shape respectively, and the plurality of plates being bonded together so as to form a third side wall portion with peripheral walls of the through-holes, the third side wall portion being a part of the side wall of the flow paths other than the first side wall portion and the second side wall portion, wherein one end side of the through-hole is closed by the first heating plate; and another end side of the through-hole is closed by the closing plate or the second heating plate, thereby the flow path being formed.

In another embodiment, a groove having a concave sectional shape is formed at a portion of the first heating plate, and the closing plate or the second heating plate is provided to close an opening of the concave groove so that the flow path are formed.

The printhead dispensing deposition material can have a configuration according to claim 3, wherein the closing plate is formed by a thin plate, a third heating plate is further provided on a side opposite to the flow path based on the thin plate, the third heating plate applying a heating effect on the deposition material in the flow path, and the deposition material in the flow path is discharged (dispensed) by instantaneous heating of the third heating plate.

Accordingly, a method according to claim 9 of forming of a three-dimensional fabricated object using the printhead of claim 3, comprises fabricating (forming) a fabricated object while discharging a deposition material of a specific flow path by applying an instantaneous heating effect only to the specific flow path with the third heating plate.

Another embodiment of the method of forming of a three-dimensional fabricated object not part of the present invention comprises arranging a plurality of printheads dispensing deposition material having rows of discharge openings respectively, so as to be aligned with the rows of discharge openings in a same direction and a discharging direction of the discharge openings is in a direction intersecting with a fabrication (forming) table, and so as to be different in vertical heights of rows of the discharge openings in at least two rows of the plurality of rows; and forming at least two layers of a fabricated object by a single scan in the x-y direction of the fabrication table provided below the rows of the printheads. Here, the expression of the direction of a discharge direction from the discharge openings intersecting with a fabrication table includes not only the discharge direction from the discharge openings perpendicular to the fabrication table (a table on which a fabricated object is formed) but also ones inclined to it.

### EFFECTS OF THE INVENTION

According to the printhead of the present invention, because a part of the side wall of the flow path for the deposition material is formed by a part of the heating plate, the deposition material is directly heated by the heat of the heating plate. As a result, thermal efficiency is considerably increased.

Also, the flow path structure body is formed by plates, a low-cost plate material is used and, in addition, formation of the flow path structure body is very easy; therefore, cost reduction is attained. In addition, manufacturing is very easy because the flow path is formed by the through-hole and the discharge opening is formed by a recess on the plate.

In addition, the third heating plate is provided on a part of a side wall of the flow path with a thin plate interposed to apply a heating effect only to a specific flow path so that the deposition material can be discharged only from the specific flow path with a simple configuration.

Also, the discharge openings are provided in a plurality of rows and are arranged in different heights in the vertical direction in the plurality of rows so that a plurality of layers can be accumulated by a single scan. Therefore, even a large-size fabricated object can be manufactured in a short time.

### BRIEF DESCRIPTION OF THE DRAWINGS

FIG. 1A is a side view illustrating a printhead dispensing deposition material of one embodiment of the present invention.
FIG. 1B is a plan view illustrating the printhead of FIG. 1A in a fixed state.
FIG. 1C is a plan view of the side of the discharge openings of the printhead of FIG. 1A.
FIG. 2 is an explanatory exploded view of FIG. 1A.
FIG. 3 is one example of a plan view illustrating one plate of the flow path structure body of FIG. 1A.
FIG. 4A is a side view illustrating the first heating plate of FIG. 1A.
FIG. 4B is a plan view illustrating the first heating plate of FIG. 1A.
FIG. 5A is a plan view illustrating a situation where a cover substrate of the first heating plate has been removed in FIG. 1A, FIG. 6, and FIG. 7A.
FIG. 5B is a view similar to FIG. 5A which shows a variation of FIG. 5A.
FIG. 5C is a view similar to FIG. 5A which shows a variation of FIG. 5A.
FIG. 5D is a view similar to FIG. 5A which shows a variation of FIG. 5A.
FIG. 5E is a view similar to FIG. 5A which shows a variation of FIG. 5A.
FIG. 6 is a perspective view illustrating a printhead dispensing deposition material of another embodiment of the present invention.
FIG. 7A is a side view illustrating a printhead of another embodiment of the present invention.
FIG. 7B is a plan view showing the side of the discharge openings of the printhead of FIG. 7A.
FIG. 8 is a plan view of one example of a plate constituting the flow path structure body of FIG. 7A.
FIG. 9A is a plan view of one example of the first heating plate of FIG. 7A.
FIG. 9B is a plan view of one example where the cover substrate of the first heating plate has been removed in FIG. 9.
FIG. 9C is a plan view of another example where the cover substrate of the first heating plate has been removed in FIG. 9.
FIG. 10A is a plan view illustrating one example of the thermal strain generating member of the FIG. 7A.
FIG. 10B is a view similar to FIG. 10A which shows a variation of FIG. 10A.
FIG. 10C is a view similar to FIG. 10A which shows a variation of FIG. 10A.
FIG. 10D is a plan view illustrating one example of the third heating plate of FIG. 7A.
FIG. 10E is a plan view illustrating another example of the third heating plate of FIG. 7A.
FIG. 11A is an explanatory view of the top surface side showing the side of the deposition material supply openings (the side of the attaching plate) in another structural example of the flow path structure body of the printhead shown in FIG. 7A.
FIG. 11B is a plan view seen in a direction of arrow B of FIG. 11A.
FIG. 11C is a plan view seen in a direction of arrow C of FIG. 11B.
FIG. 11D is an explanatory view illustrating another example in which two discharge openings are formed in one flow path.
FIG. 12A is an explanatory view of the top surface side, which is similar to FIG. 11A, seen from the side of the attaching plate where two flow path structure bodies are put together with a partition plate, which is not shown, interposed therebetween.
FIG. 12B is a plan view similar to FIG. 11C which shows the side of the discharge openings of the FIG. 12A.
FIG. 13A is a view similar to FIG. 7A illustrating an example of a printhead in which two of the printheads of FIG. 7A are bonded and the discharge openings are formed in two rows.
FIG. 13B is a plan view seen from the side of supply openings (the side of attaching plate) of FIG. 13A.
FIG. 13C is a plan view seen from the side of the discharge openings of FIG. 13 A.
FIG. 14A is a view showing a variation of the structure of the part of the discharge opening.
FIG. 14B is a view showing another variation of FIG. 14A.
FIG. 14C is a view showing another variation of FIG. 14A.
FIG. 15 is a view showing an example of a drive circuit for controlling an insulating substrate of a heating plate to be at a predetermined temperature.
FIG. 16 is a circuit diagram showing one example of substrate temperature control.
FIG. 17 is an explanatory sectional view showing one example of a conventional nozzle for discharging a deposition material.

### EMBODIMENT FOR CARRYING OUT THE INVENTION

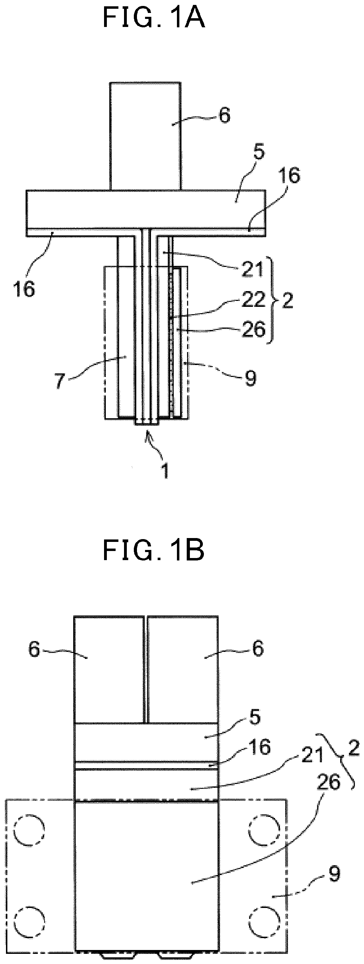

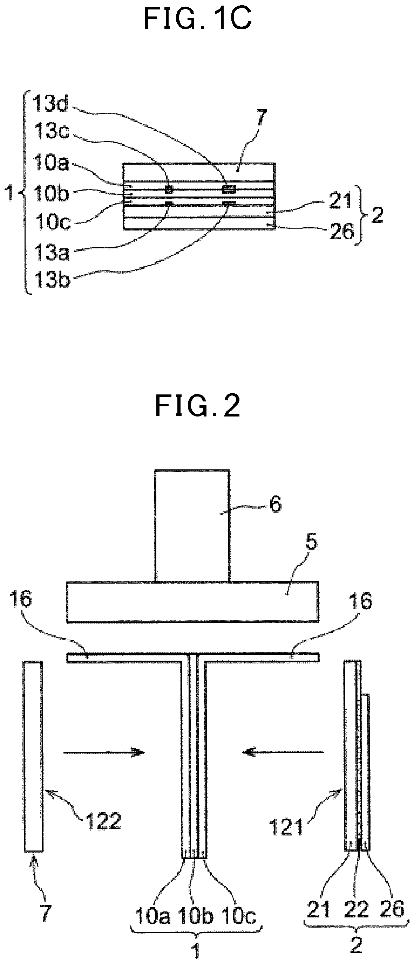

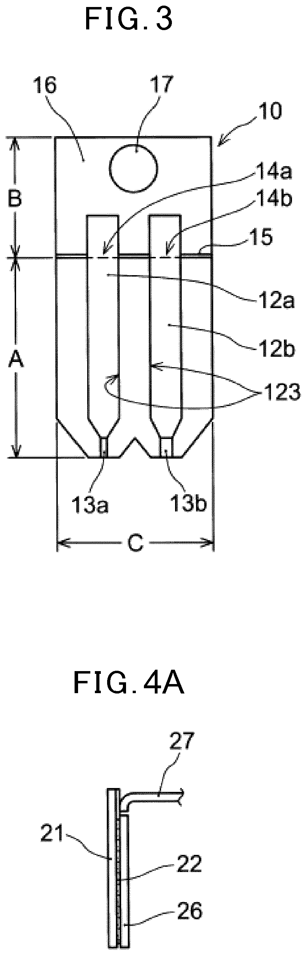

Next, by referring to the figures, the printhead dispensing deposition material of the present invention and the method of forming therewith are described. FIGS. 1A-1C show a side view, a plan view, and a plan view, respectively of a printhead dispensing deposition material of one embodiment of the invention, seen from the side of discharge (dispense) openings and FIG. 2 shows an exploded view thereof. The printhead dispensing deposition material of the embodiment, as shown in the exploded view of FIG. 2, comprises a first heating plate 2 constituting a first side wall portion 121 (see FIG. 2), which is a part of a side wall forming flow paths 12 (12a, 12b) (see FIG. 3) wherein deposition materials flow, and heating the deposition materials in the flow paths 12; a closing plate 7 or a second heating plate (not shown) constituting a second side wall portion 122 (see FIG. 2) which is a part of the side wall other than the first side wall portion 121; discharge openings (orifices) 13 (13a, 13b) (see FIG. 3) communicating with the flow paths 12 and formed at one end side (tip) of the flow paths 12; and material supply openings (orifices) 14 (14a, 14b) (see FIG. 3) communicating with the flow paths 12 and formed at another end side of the flow paths 12. The entire body thereof is fixed to a supply device, which is not illustrated, by an assembly plate 9.

In an example of one embodiment, as shown in FIG. 3, a flow path structure body 1 is formed (see FIG. 2) in which a plurality of plates 10 (10a-10c) having through-holes 12a, 12b of almost the same shapes are put together so that peripheral walls 123 of the through-holes forms a third side wall portion 123 which is a side wall of the flow paths 12 other than the first side wall portion 121 and the second side wall portion 122. As shown in FIG. 2, one end side of the through-holes (the flow paths 12) is closed by a back surface of a insulating substrate 21 of the first heating plate 2 and another end side of the through-holes is closed by the closing plate 7 or the second heating plate, which is not illustrated, to form the flow paths 12.

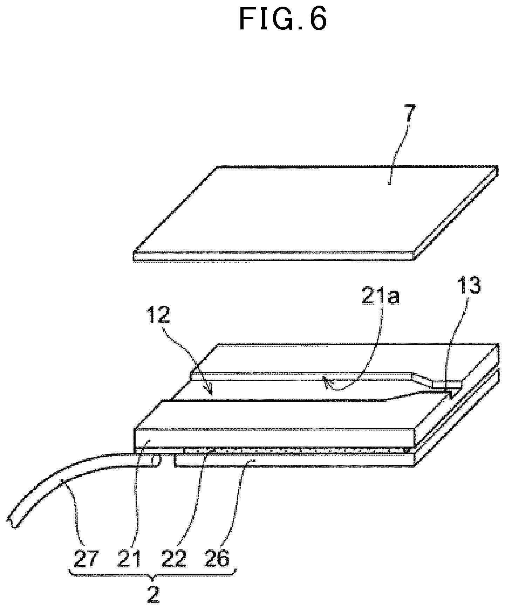

Also, in other embodiment, as shown in FIG. 6 for example, a groove 21a having a concave sectional shape is formed at a part of the first heating plate 2 and the closing plate 7 or the second heating plate, which is not illustrated, is provided to close an opening of the concave groove 21a so that the flow path 12 may be formed. At the one end of this flow path 12 (the groove 21a), the discharge opening 13 narrower than the groove 21a is formed.

In the flow path structure body 1 in an example shown in FIG. 1, three plates 10a, 10b, 10c (or 10 when referred altogether as shown in FIG. 3) are put and bonded together. As shown in FIG. 3, the flow paths 12 (12a, 12b) are formed on each of the plates 10 as the through-holes so that the melted deposition materials flow therein. In addition, the discharge openings 13 (13a, 13b) are formed at each one end of the paths 12a, 12b and connected therewith. The discharge opening 13 is formed as a recess having a depth of about a half of the thickness of the plate 10 without penetrating through the plate 10. This recess is formed by half etching, stamping, machining, or other methods. The shape of this recess (the sectional shape of the discharge openings 13) is not limited to the rectangular shape as shown in FIG. 1C and may be a circular shape or other shape. The number of these discharge openings 13, or the number of the recesses, is as many as needed in accordance with its intended use. Also, when these recesses are formed, a groove 15 (see FIG. 3) of a similar recess is formed at a position in accordance with the length of the printhead so that the plates 10 can be easily bent at a right angle. As shown in FIG.2, the bent portion becomes an attaching portion 16 which is fixed to an attaching plate 5. 17 is a hole (a through-hole) for fixing the flow path structure body 1 to the attaching plate 5 with a screw.

The plates 10 are formed from a material excellent in heat conductivity and easy to be processed to have the through-hole 17 and the recesses. Taking this into consideration, a thin metal plate is preferable. As one example, the plate 10 shown in FIG. 3 is a stainless steel plate having a thickness of about 0.6 mm, wherein a dimension A from a tip of the discharge opening 13 to the groove 15 for folding is 13 mm, a dimension B from the groove 15 to an end portion opposite to the discharge opening 13 is 7.5 mm, and a width C is 10 mm. These dimensions are, however, one example and are not limited to this example. Also, it is illustrated that the flow paths 12 (12a, 12b) have a width of 2 mm, the discharge opening 13a has a width of 0.4 mm, the discharge opening 13b has a width of 0.8 mm, and the through-hole 17 has a diameter of 3.2 mm. When a stainless steel plate has the above-mentioned thickness, the above-mentioned flow paths 12, through-hole 17, and external shapes thereof are easily formed by punching process. The external shapes are formed in various sizes depending on applications. The shape of a surrounding part of the discharge opening 13 is also formed freely depending on applications. When the flow path structure body is formed by such plates 10, the flow paths 12 are formed by the through-holes on the plates, and the discharge opening 13 is formed as a recess portion formed to have about a half depth of the plate 10; therefore, costs of materials and processing are significantly low. In addition, because the flow paths 12 are formed by the through-holes and the openings thereof are directly closed by the first heating plate 2, the deposition materials are directly and efficiently heated.

Furthermore, the plate thickness is also not limited to the above example, and the plates having various thicknesses can be used in accordance with its intended use. Also, the number of the plates 10 to be put together is not limited to three and can be increased more. When the number of plates is increased, a number of discharge openings connecting with the same flow path 12 can be formed. A printhead dispensing deposition material which can vary its discharging amount can be obtained. Specifically, the discharge opening 13 is formed by forming a recess communicating with the through-holes 12 on at least one of a plurality of the plates of the flow path structure body 1. It should be noted that one of the plates is illustrated in FIG. 3, and the external shape and the flow paths 12 are common in each of the plates 10. However, the recesses to be discharge openings differ in their shapes and quantities. For example, in the plate 10a and the plate 10b on which the discharge openings 13c, 13d shown in FIG. 1C are formed, the recesses are formed to be symmetrical. Also, when two plates 10 are put together to form the discharge openings 13 in this manner, the recesses are not limited to be the same size or the same shape. A recess of 0.4 mm width and a recess of 0.2 mm width may be put together, and rectangular and circular recesses may face each other.

The discharge opening 13 is formed, for example, by half etching. Specifically, the discharge opening is formed by forming a resist mask on a part where the discharge openings 13 are not formed, and then dipping in an etching solution or spray-etching for spraying an etching solution. Electrolytic etching can also be performed. A depth of etching is controlled according to a time period of exposure to the etchant. In the case of too deep etching, the mechanical strength is reduced, and therefore, the depth of etching is preferably about a half of the thickness of the plate 10 or less. When the plates 10 are thin and a large discharge opening 13 cannot be formed, for example, as shown in the discharge openings 13c, 13d of FIG. 1C, by forming similar recesses at facing positions of the two plates 10a and 10b where the recesses face each other (as mentioned above, the positions of the recesses differ from each other in the two plates 10a and 10b), the discharge openings 13c, 13d having a total depth of the both of the recesses are formed when the plates 10a and 10b are put together. Also, when these recesses are formed by stamping with a metal mold or the like, depending on the shape of the metal mold or the like, recesses having a spherical shape or a cylindrical shape can be formed. When stamping as mentioned above is performed, formation of the recess and other processes of punching (for the external shape and the through-hole 17), making grooves 15, or folding are performed simultaneously or continuously.

For example, three plates 10a, 10b, 10c in which the through-holes (the flow paths 12) and the recesses (the discharge openings 13) are formed are put and bonded together, for example, with a heat resistant adhesive or the like. Then, at the grooves 15 (see FIG. 3), the plates 10a, 10c on the opposite sides are folded to the opposite directions respectively, the plate 10b in the middle is cut at the groove 15, and the folded attaching portions 16 are fixed to the attaching plate 5, thereby forming the flow path structure body 1, as shown in FIG. 1A. Folding and cutting of the plates are possible without forming this groove 15. When the plates are being put together, the above-mentioned through-hole 17, a projecting part of the external shape, and the like are used for alignment. It should be noted that when the plates 10 consist of two plates, cutting is not necessary.

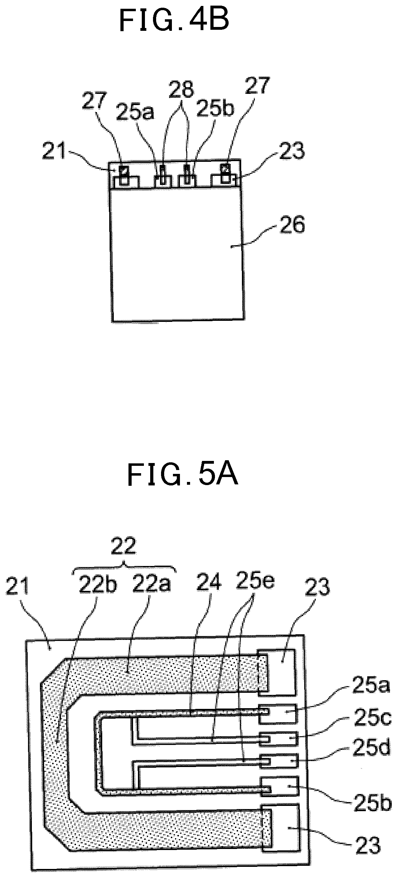

As shown in FIG. 1A, the first heating plate 2 is bonded to at least one surface of the flow path structure body 1. On the one surface of the flow structure 1, the side of the first side surface and the side of the second side surface of the flow paths 12a, 12b formed by the through-holes (the right side surface and the left side surface of the flow path structure body 1 in FIG. 2) are open, however, the first side wall portion 121 of these flow paths 12a, 12b is formed by a back surface of an insulating substrate 21 of this first heating plate 2 to close the one end side of the through-holes (the flow paths 12). The insulating substrate 21 of the first heating plate 2 is the hottest part because heating elements 22 (see FIG. 5A) are provided at one side thereof, and the temperature of the deposition materials supplied in the flow paths 12 can be raised easily. Thus, a deposition material such as a filament is easily melted. Since not only the inside of the flow paths is directly heated but also the temperature of the flow path structure body 1 itself is raised, a surface on the opposite side (the other surface of the flow path structure body 1) is also raised. However, when this flow path structure body 1 is so large that the temperature is not raised sufficiently, a second heating plate which is not illustrated may be provided also on the side of the second side surface. Specifically, instead of the closing plate 7, the second heating plate having a structure similar to that of the first heating plate can be provided. It is preferable that a thermal insulating member is, though it is not illustrated, provided on a cover substrate 26 on the opposite side from the insulating substrate 21 of this first heating plate 2. By doing so, heat of the first heating plate 2 is effectively used.

When the first heating plate 2 is bonded to this flow path structure body 1, they may be adhered, for example, with a heat resistant adhesive, however, an adhesive which allows easy detachment is preferable. The bonding also may be conducted by screwing and the like. By bonding detachably, disassembling and cleaning can be carried out when the deposition material becomes hardened in the flow path 12. As a result, maintenance becomes easy.

On the other side of the flow path structure body 1, the closing plate 7 is bonded so as to close openings of the through-holes constituting the flow paths 12 as the first heating plate 2 does. The second side wall portion 122 (see FIG. 2) is formed by this closing plate 7. It is preferable that the closing plate is bonded in an easily disassemblable manner to facilitate disassembling and cleaning of the flow path structure body 1. This closing plate 7 may be a ceramic plate as the insulating substrate is, or may be other metal plate, a synthetic resin plate, an insulating film, or the like. When a discharge actuator, which will be described below, is formed, this closing plate 7 is preferably a thin plate material or film. This closing plate 7 may be provided with the second heating plate when the temperature of the flow path structure body 1 is not raised sufficiently, as mentioned above. By doing so, the both sides are heated, and the flow path structure body 1 can be sufficiently heated even when the flow path structure body 1 is of a large size. For this closing plate 7, a material having a low heat conductivity is preferable, however, it is preferable that a material having the same thermal expansion coefficient as that of the insulating substrate 21 of the first heating plate 2 or the same material as the insulating substrate 21 is used because warping due to difference between the thermal expansion coefficients can be prevented.

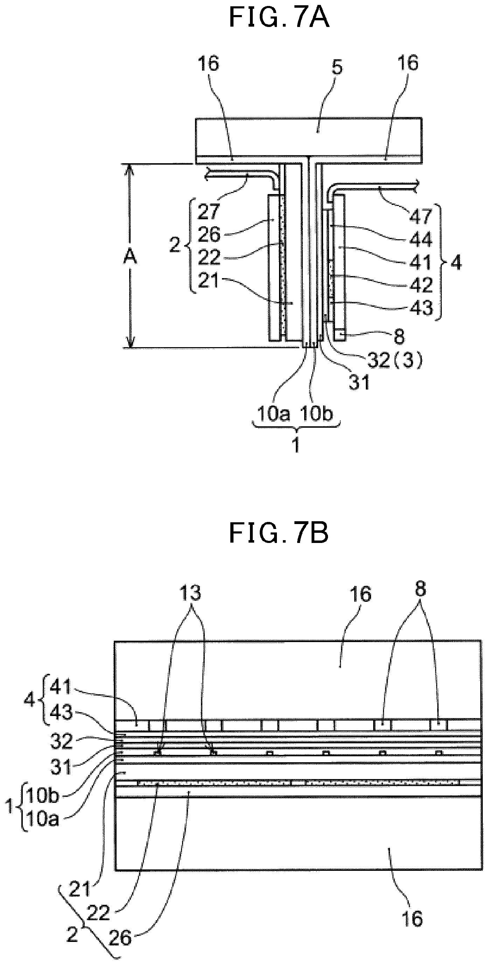

The above-mentioned folded attaching portion 16 of the flow path structure body 1 is fixed to the attaching plate 5. As a result, the printhead dispensing deposition material as shown in FIGS. 1A-1C is formed. It should be noted that the attaching plate 5 have a barrel 6 attached thereto and a device supplying a filament (not shown) as a deposition material at a constant rate is attached to the barrel so that the deposition material is supplied at a regular interval. The configuration employing a conventional barrel 62 (whose threaded portion in FIG. 17 is 6 mm in a diameter) is a configuration in which a wire-shaped material having a circular section is supplied as mentioned above, but in the present invention, a flat, tape-shaped material may be supplied in the barrel 6 because the sectional shape of the flow paths 12 may be rectangular. As a result, a predetermined amount of the deposition material is discharged (dispensed) from the discharge openings 13 at a constant rate. The flat, tape-shaped material can be wound around a reel without spatial waste, and that makes carrying and storage of the material easy. Furthermore, a discontinuous discharge configuration may be adopted without using the barrel 6, as shown in FIG. 7A which will be described below. In the example shown in FIG. 1B, two flow paths 12 (see FIG. 3) are formed, so two barrels 6 are formed.

Now, the first heating plate 2 is described in detail. In FIGS. 4A-4B, one example of the first heating plate 2 is illustrated in a side view and a plan view. The first heating plate 2 has, as shown in FIGS. 4A-4B and FIGS. 5A-5E, the heating elements 22 for heating the insulating substrate 21 are formed on one surface of the first insulating substrate 21. At the heating elements 22, electrodes 23 for applying an electric current in the longitudinal direction of the heating elements 22 are formed. In addition, a temperature measurement resistor 24 (see FIG. 5A) is formed near the heating elements 22. On the temperature measurement resistor 24, measurement terminals 25 for measuring electric resistances at predetermined portions are formed. A cover substrate 26 is adhered on top of them with a glass material or the like which is not illustrated and leads 27, 28 are connected with the electrodes 23 of the heating elements 22, and the measurement terminals 25 (25a, 25b) of the temperature measurement resistor 24, and leads 27, 28 are led out. The connections between these leads 27, 28 and the electrodes 23 or the measurement terminals 25 are made by a high melting point solder or, when heat resistance against a temperature higher than 500°C is required, by an inorganic electrically conductive adhesive or the like. Also, as will be described below, for the use as a printhead dispensing deposition material, a control means including an actuator circuit of the heating elements 22 and a measurement circuit for measuring the temperature of the insulating substrate 21 is provided. The control means, by controlling the electric current through the heating elements 22, controls the actuator circuit to adjust the temperature of the insulating substrate 21 to a predetermined temperature. It should be noted that connecting parts between the leads 27, 28 and the electrodes 23 or the measurement terminals 25a, 25b are protected by a protecting member so that the leads 27, 28 are not bent at the connecting parts. It should be noted that, in FIG. 4B, for clarity of the drawing, only the outer-most ones, the measurement terminals 25a, 25b, of the measurement terminals for temperature measurement are illustrated, and the measurement terminal 25c, 25d branching from the measurement terminals 25a, 25b as shown in FIG. 5A are omitted.

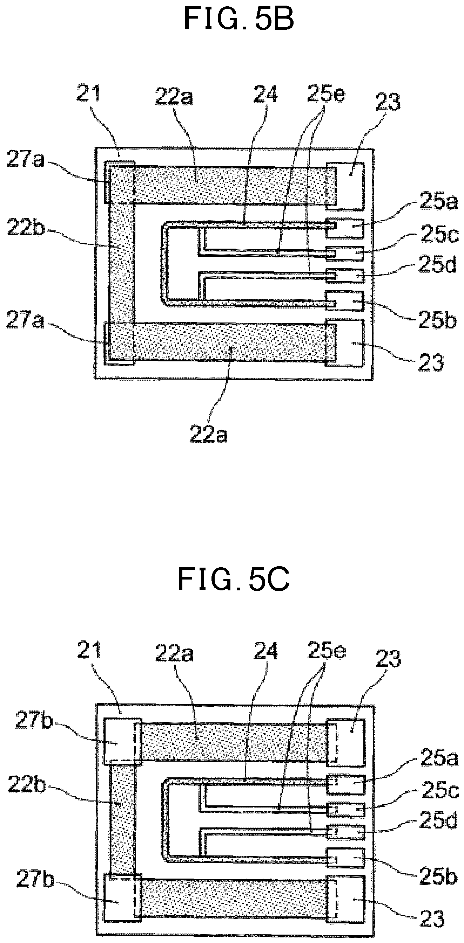

This first heating plate 2 has a configuration similar to a conventional heating head used for recording and erasing data on a card or others, in which the heating elements 22, and the temperature measurement resistor 24 are provided on one surface of the insulating substrate 21 with an insulating glaze layer consisting of glass or the like interposed therebetween. However, in the present invention, as shown in FIG. 5A for example, the heating elements 22 do not consist of linear portions (first heating elements) 22a only but are shaped in which each one end of the two linear portions 22a is coupled with a second heating element 22b provided so that they have components perpendicular to the linear portions 22a (so that the two linear portions 22a are coupled). As a result, the heating elements 22 are shaped, for example, in a U shape, a V shape, an L shape, or the like and characterized in that a temperature gradient is formed in the insulating substrate 21 and the heating element (the second heating element) 22b of the bottom portion of the U shape is disposed on the side of the discharge openings 13 of the flow path structure body 1. It should be noted that herein, this U shape, as described above and as shown in FIGS. 5B-5E for example, does not need to be literally shaped in the form of the letter U as long as it is in a shape having the two linear portions 22a and the second heating element 22b coupling thereof and means to include other shapes such as a C shape.

With the second heating element 22b formed as shown in FIG. 5A, when an electric current is applied to the heating elements 22, they generate heat and the insulating substrate 21 is heated, wherein the temperature of the insulating substrate 21 is higher on the side where the second heating elements 22b is formed than the opposite side where a pair of the electrodes 23 are formed. In this case, as shown in FIG. 5A, when the second heating element 22b is formed to be narrower than the heating elements (the first heating elements) 22a, the linear portions, in width, a resistance value per unit length of the heating elements 22 is larger than the heating elements 22a. Because they are connected in series, they have the same electric current, and the one with a larger resistance value generates more heat. Therefore, the temperature of the substrate can be raised more at the portion of the second heating elements 22b.

When the building material at a portion near the discharge openings is away from a heater and its temperature drops, the viscosity thereof is increased and the building material is solidified and thus clogging is likely to occur. However, in this embodiment, as shown above, when a temperature gradient is formed in the insulating substrate 21 and the temperature is higher on the side of the discharge openings 13, the temperature of the building material at the portion near the discharge openings is high and the building material can be discharged with excellent fluidity. In other words, in a conventional heater block in which the temperature is constant throughout the entire body, the temperature of the entire body of the heater block needs to be raised in order to prevent the temperature of the heater block at the discharge openings side from dropping. However, when the temperature of the central part of the heater block becomes too high, deposition material begins to be decomposed or evaporated, which results in carbonization. Therefore, the heater block should not be heated to a high temperature. As mentioned above, by improving the fluidity, the deposition materials are discharged with a small pressure even when the size of the discharge openings 13 is smaller.

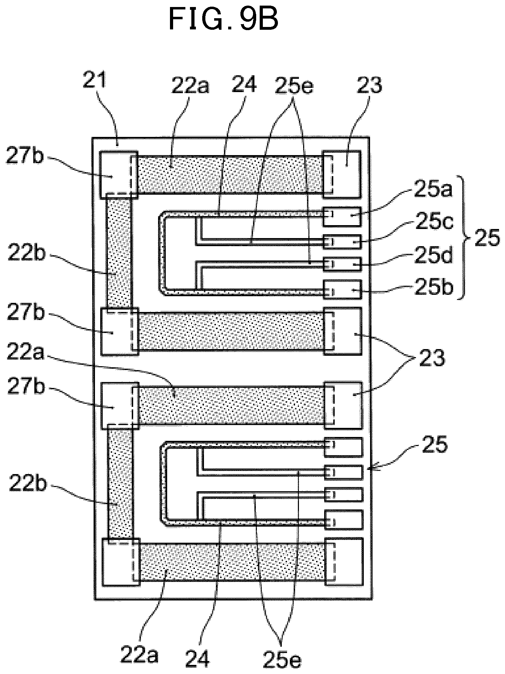

For the insulating substrate 21, an insulating substrate having an excellent thermal conductivity and comprising alumina or the like is used. Regarding the shape and dimension thereof, as more discharge openings 13 are needed in accordance with an intended fabricated (formed) object, the flow path structure body 1 becomes larger and accordingly the first heating plate 2, and thus the insulating substrate 21 also become larger. Therefore, the insulating substrate 21 having a size required for a purpose is used, and for example, in the above mentioned example of the flow path structure body 1, an alumina substrate having a size of about 10 mm square, and a thickness of about 0.6 mm is used for two flow paths 12. It is a matter of course that a plurality of the first heating plates 2 may be provided to one flow path structure body 1. Its external shape is also not limited to a rectangular shape and is shaped in accordance with a required shape of the flow path structure body 1. Thus, when twelve flow paths 12 are formed, as mentioned above, the first heating plate 2 (10 mm × 60 mm) has a size of six first heating plates 2 each being 10 mm square (three of FIG. 9B). The external shape is also not limited to a rectangular shape and is shaped in accordance with a required shape of the flow path structure body 1. This insulating substrate 21 is generally formed in a size from about 5 mm square to about 35 mm square, however the size is not limited to this and may be a large size such as 10 mm × 220 mm, and an elongated one may be formed in accordance with the number of discharge openings of a line head and others. In addition, a plurality of this first heating plate 2 may be aligned so that the insulating substrate 21 has a corresponding size to the size of the line head.

The cover substrate 26 which will be described below is formed to protect the heating elements 22 and others formed on the insulating substrate 21, at the same time, to increase a heat capacity of the insulating substrate 21, and, moreover, to prevent warping of the insulating substrate 21 due to the difference between the thermal expansion coefficients. Therefore, though thermal conductivity is not required so much, an alumina substrate having the same thickness as the insulating substrate 21 is used. This cover substrate 26 is not in contact with the flow path structure body 1 and therefore, it is preferable that its thermal conductivity is low. Thus a material having an even lower thermal conductivity can be used. However, when a thermal insulating sheet is affixed to a surface of this cover substrate 26, the same material (a material having the same thermal expansion coefficient) as that of the insulating substrate 21 can be used. Also, the printhead dispensing deposition material is usually configured so that its maximum operating temperature is 150°C, 250°C, 500°C, or the like and a heating temperature is set to a temperature required for an intended purpose.

The heating elements 22 are optimally adjusted in its temperature coefficient, resistance value, and the like by suitably selecting and mixing powders of Ag, Pd, RuOa, Pt, a metallic oxide, glass, and the like. This mixed material is made into a paste, applied, and baked. By this process, the heating elements 22 are formed. A sheet resistance of a resistive film formed by the baking can be changed by an amount of solid insulating powder. The resistance value and the temperature coefficient can be changed by a ratio of the both. Also, for a material used as conductors (electrodes 23, 25, and coupling conductors 27a-27d), a material in a similar paste form in which the proportion of Ag is increased, and the proportion of Pd is decreased is used. By doing so, as in the heating elements 22, the conductors also can be formed by printing. There is a case where due to connections of terminals, it needs to be changed depending on a working temperature. The more Ag is contained, the lower the resistance value may be. The temperature coefficient of resistance of the heating elements 22 is preferably a greater positive number, and it is especially preferable to use a material of 1000-3500 ppm/°C. Also, though it is not illustrated, when an electrode is provided at a suitable position along the flowing direction the electric current of the heating elements 22, a voltage can be partially applied. By doing so, a temperature can vary at positions.

The temperature coefficient of resistance being a large positive number means that as the temperature is elevated, a rate of increase in the resistance value becomes larger. Therefore, with the temperature coefficient of resistance being a positive value, when the temperature is elevated excessively, the resistance value increases and a current value drops, and an amount of heat generation due to resistance is reduced. Therefore, its temperature saturation is reached faster, and its temperature stability at a high temperature is excellent. In addition, overheating due to thermal runaway or the like can be prevented. It should be noted that a width of a normal portion of the heating elements 22 also can be adjusted to a predetermined temperature in accordance with its intended use, and a plurality of the heating elements 22 can be aligned in parallel.

Also, at the both ends of the heating elements 22, the electrodes 23 comprising a good conductor such as a silver-palladium alloy with a smaller proportion of palladium or an Ag-Pt alloy are formed by printing or the like. The electrodes 23, as shown in FIGS. 4A-4B mentioned above, are configured so as to be connected to the lead 27, thereby being connected to a power source to turn on electricity to the heating elements 22. This power source may be a direct current or an alternating current, and also may be a pulse voltage. When it is a pulse voltage, an applying power can be controlled by changing its duty or pulse frequency.

Near the heating elements 22, the temperature measurement resistor 24 is formed on a surface of the insulating substrate 21 in the same manner as in the heating elements 22. This temperature measurement resistor 24 is preferably formed along the heating elements 22, as shown in FIG. 5A. In the example shown in FIG. 5A, the temperature measurement resistor 24 is formed in a U shape in which two linear portions are coupled, as the heating elements 22 are. The both ends thereof are connected to a pair of measurement terminals 25a, 25b. These measurement terminals 25a, 25b are also formed of a good conductor material, as the above-mentioned electrodes 23 are. To this temperature measurement resistor 24, not only a pair of the measurement terminals 25a, 25b are connected at the both ends but also each one end of measurement leads 25e is respectively connected at positions one third of the length from the both ends, wherein the other ends of the measurement leads are respectively connected to measurement terminals 25c, 25d. The reason will be described below.

The temperature measurement resistor 24 may be formed of the same material as the heating element 22, however, a material having an absolute value (%) of the temperature coefficient as large as possible is preferable. This temperature measurement resistor 24 is provided not for generating heat but for detecting and controlling a temperature of the insulating substrate 21 so that the temperature of the insulating substrate 21 reaches the melting temperature of the deposition material. Therefore, the temperature measurement resistor 24 is formed to be a littler shorter than the heating elements 22, with a width of 0.5 mm. Also, an applied voltage is suppressed to be low so that the temperature measurement resistor 24 itself does not generate heat, and for example, about 5V is applied. Because this temperature measurement resistor 24 is provided directly on the insulating substrate 21, the temperatures of the both are almost the same. As a result, by measuring a resistance value of the temperature measurement resistor 24, a temperature of a surface of the insulating substrate 21, and thus a temperature of the deposition material being in close contact with a back surface of the insulating substrate 21 are estimated. That is to say, because, in general, a resistance value of a resistor material is changed when a temperature thereof is changed, the temperature can be measured by measuring the change of the resistance value. While a temperature detection means will be described below, a temperature of the temperature measurement resistor 24 is detected by detecting a voltage change at the both ends of this temperature measurement resistor 24. Therefore, a larger temperature coefficient of the resistor allows a smaller measurement error. It should be noted that the temperature coefficient can be positive or negative in this case.

The temperature measurement resistor 24 is not limited to the same material as the heating elements 22 and formed by printing or the like in accordance with its intended use. Specifically, when a microscopic temperature difference is required, a material having a different mixing ratio of Ag and Pd or a totally different material having a large temperature coefficient may be used. The temperature measurement terminals 25a, 25b are not necessarily formed at the ends of the temperature measurement resistor 24. For example, as shown in FIGs 5A-5E, the temperature measurement resistor 24 may be formed in one piece in a U shape, the temperature measurement terminals 25c, 25d may be formed with the measurement lead 25e branching from the middle part thereof and, in addition, the measurement terminals 25a, 25b to be connected to the both ends may be formed. By doing so, local temperature measurement becomes possible. Specifically, by using the measurement terminal 25a and the measurement terminal 25c, a temperature of about a one third portion on the side of the measurement terminal 25a of the U-shape temperature measurement resistor 24 is measured, and by using the measurement terminal 25c and the measurement terminal 25d for measurement, a temperature near corners of the U shape (the part of the second heating element 22b) is measured. In addition, by using the measurement terminal 25d and the measurement terminal 25b for measurement, a temperature of the remaining one third portion of the temperature measurement resistor 24 is measured. Furthermore, by measuring with the measurement terminal 25a and the measurement terminal 25b, an average temperature of the whole insulating substrate 21 is measured. The number of these measurement terminals is not limited by the positions of about one third, and more measurement terminals may be provided at smaller intervals or fewer measurement terminals may be provided at larger intervals. Especially, because a temperature may vary depending on a position on the insulating substrate 21 when the insulating substrate 21 is large, it is preferable that measuring points are provided at small intervals. The measuring position is preferably near the heating elements 22.

It should be noted that a position where the temperature measurement resistor 24 is formed and a position of the measurement terminal 25 are set in accordance with designs such as the size of the insulating substrate 21 (the first heating plate 2) or the degree of the temperature gradient and the like.

The example shown in FIG. 5B is an example where the heating elements 22 are formed in a channel-shape, wherein the width of the second heating element 22b is narrower than the width of the linear portions of the heating elements (the first heating elements) 22a. The purpose thereof is, as described above, to set the temperature of this portion to be higher than the temperatures of the parts of the first heating elements. As shown in FIG. 5B, it is preferable that a coupling conductor 27a is provided at least at a part of the corner. That is because, at the corner, electric currents are concentrated at an internal portion where a path is shorter and a resistance is smaller, and electric currents through an outer circumferential side are reduced, and thus heat generation is difficult to be uniform. As shown in FIG. 5B, when the coupling conductor (a conductor layer) 27a is provided at least at a part of the corner, electric currents parallelly flowing through the heating elements 22 having a constant width flow uniformly throughout the coupling conductor 27a. Thus, the electric currents uniformly flow though the second heating element 22b of the bottom portion, and also the electric currents uniformly flow throughout the first heating elements 22a, the linear portions. It should be noted that, in the example shown in FIG 5B, the electrodes 23 and others, and the coupling conductors 27a are formed first by printing, and then the heating elements 22 and others are formed thereon.

However, the locations thereof may be upside down, and, as shown in FIG. 5C the heating elements 22 and others may be formed first, and subsequently the electrodes 23 and the coupling conductor 27b may be formed. The heating elements 22 may not be provided at the portions where the coupling conductors 27a, 27b are formed, however, the heating elements 22 may be provided there because the electric currents flow through the portion of coupling conductor 27a, where the resistance is smaller.

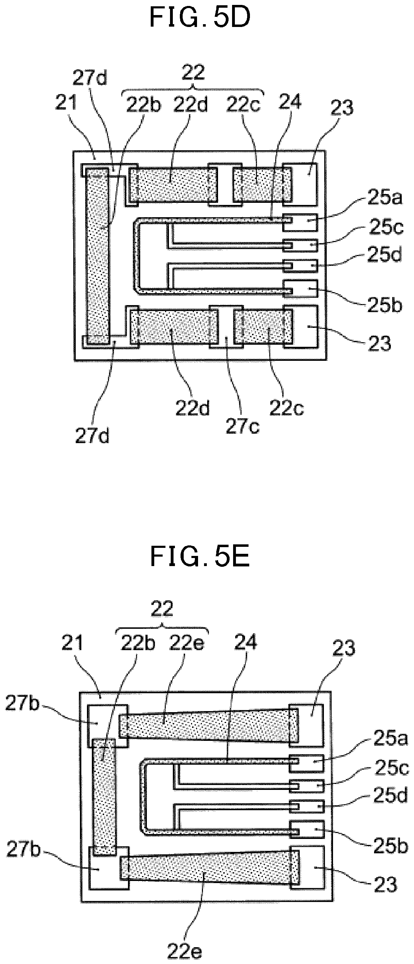

In the example shown in FIG 5D, the portions of the linear heating elements (the first heating elements) 22a are cut and connected with coupling conductors 27c. With such configuration, heat generation hardly occurs at the portions connected by the coupling conductors 27c because there is little resistance there. Thus a temperature near these positions drops. Therefore, when these coupling conductors 27c are formed on the sides of the ends where the electrodes 23 are provided, a temperature of the insulating substrate 21 on the sides where the coupling conductors 27c are provided becomes lower than the sides where the coupling conductors 27c are not provided. As a result, a temperature gradient is formed on the insulating substrate 21. In other words, a temperature gradient is formed on the insulating substrate 21 even if the heating elements 22 are not formed into the above-mentioned U shape. It should be noted that, though it is not illustrated, when the heating elements 22c and 22d, which are parts of the heating elements 22 divided into two or more pieces, have different widths and the widths become narrower as they get farther from the electrodes 23, a larger temperature gradient can be formed on the insulating substrate 21. In FIG. 5D, the second heating element 22b is formed, however the temperature gradient can be formed without it. The number of portions where the heating elements 22a is cut off and the coupling conductor layer 27c is formed is not limited to one portion and may be formed at a plurality of portions. Also, in this case as well, while the coupling conductor layer 27c is formed, the heating element 22a may be formed continuously. In addition, a coupling conductor 27c may be formed on the top of the heating element 22a.

FIG. 5E is a figure showing a further example for forming a temperature gradient on the insulating substrate 21. In this example, the heating elements 22 are formed so that the heating element 22 has portions 22e formed linearly along the direction of flow path 12, and the linear portions 22e are formed into a tapered shape or in such a way that their width becomes gradually narrower, and therefore, a temperature of the insulating substrate 21 on the side of the discharge openings 13 is higher than the side of the supply openings. Specifically, the heating elements 22 are not constant in a width, are wider on the side of the electrodes 23, and are narrower on the side opposite from the electrodes 23. Even in this configuration, as the heating elements 22e become narrower, as mentioned above, a series resistance value becomes larger, and thus more heat is generated. In other words, a substrate temperature of the narrower side of the tapered heating element 22e is raised. Therefore, when a temperature gradient is formed in this method, the second heating element 22b is not necessary, although in the example of FIG. 5E, the second heating element 22b is formed. It should be noted that the other parts are the same as each of the above-mentioned examples, and therefore, the same figures are assigned to the same parts, and the descriptions thereof are omitted.

As mentioned above, the number of the heating elements 22, the number of temperature measurement resistors 24, and the number of measurement terminals for temperature measurement, and the like are not limited. The heating elements 22 are formed by adjusting the number thereof or the width of each of the heating elements 22 so as to be heated to a desirable temperature in accordance with the size of the flow path structure body 1 and the melting point of the deposition material.

When the heating elements 22, the temperature measurement resistors 24, the electrodes 23, and the measurement terminals 25 are formed on one surface of the insulating substrate 21 as shown above, the first heating plate 2 and the second heating plate, which is not illustrated, are formed. On a surface side of this first heating plate 2, the cover substrate 26 is affixed, via a glass adhesion layer, which is not illustrated. The cover substrate 26 may have a smaller thermal conductivity than the insulating substrate 21, but preferably is made of a material having almost the same thermal expansion coefficient as that of the insulating substrate 21 or a material which is the same as that of the insulating substrate 21 and has the same thickness as the insulating substrate 21. On the other hand, in the case where heat is not sufficiently generated with this first heating plate 2, a multiple heating plate may be used, wherein the multiple heating plate is formed by facing the insulating substrates 21, on which these heating elements 22 and others are formed, each other with an insulator interposed therebetween or by putting them together facing in the same direction, with the cover substrate 26 affixed to an exposed surface thereof. More heat may be generated simply by putting the first heating plates 2 together. When such a case is possible, it is preferable that this cover substrate 26 has about the same thermal conductivity as the insulating substrate 21.

In the examples of FIGS. 1A-1C, a third side wall portion 123, which is a side wall of the flow path, is formed by a side wall of the through-hole of the flow path structure body 1, and the both ends of the through-holes are constructed with the first side wall 121 of the first heating plate 2 and the second side wall 122 of the closing plate 7. However, the flow paths 12 may be formed, without using the above flow path structure body 1, by forming a groove 21a having a concave sectional shape at a portion of the insulating substrate 21 or the cover substrate 26 of the first heating plate 2, and closing an opening of the groove 21a by the closing plate 7 or the second heating plate. In this case, a circumference of the groove 21a (see FIG. 6) formed on the first heating plate 2 becomes the first side wall portion of the flow paths 12 and a part closed by the closing plate 7 becomes the second side wall portion. An example thereof will be described in reference to FIG.6.

FIG. 6 is illustrated showing the back surface of the insulating substrate 21 of the above-mentioned first heating plate 2. Specifically, the groove 21a is formed on the back surface of the insulating substrate 21 so that the flow path 12 is formed and the narrowed discharge opening 13 is formed on one end side thereof. To this surface, the closing plate 7, or a thin plate 31 and a third heating plate 4 which will be described below, or the second heating plate are bonded so that the second side wall portion of the flow path 12 is formed. Also in this configuration, the first side wall portion (the C-shaped portion) of the flow path 12 is formed by the first heating plate 2, and thus the deposition material in the flow path 12 is heated very efficiently. In the example shown in FIG. 6, the groove 21a is formed on the back surface of the insulating substrate 21, however, a groove for a flow path may be formed on the cover substrate 26 or a protecting plate formed instead of the cover substrate 26. Formation of a groove on such a ceramic plate is conducted, for example, by either a process in which a powdered ceramic material is pressure molded with a mold and then sintered, or a process in which grooving is conducted on a ceramic material such as a green sheet which is in a state of being processed easily, and subsequently sintering is conducted. Also, a sectional shape of the groove forming the flow path 12 is not limited to a rectangular shape. The sectional shape may be, for example, a part of a circular shape.

The examples shown in FIGS. 1A-1C are examples of the printhead where the deposition materials are discharged continuously. In these cases, a discharge amount is determined depending on a device supplying a material such as a filament, which is not illustrated, at a constant rate in the barrel 6, and the desired material is discharged from the desired discharge opening 13 to form a fabricated object.

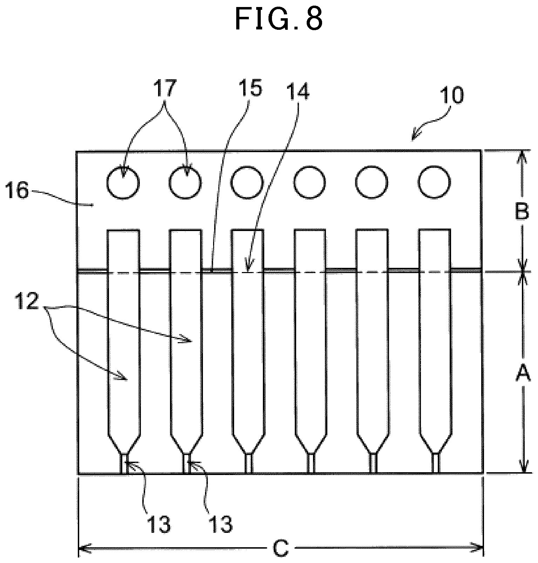

FIGS. 7A-7B are figures showing further embodiments of the printhead dispensing deposition material of the invention. In FIG. 7A, while the first heating plate 2 is provided on the left side of the flow path structure body 1, it may be the same as in FIG. 1A. In this embodiment, the closing plate 7 is formed by the thin plate 31, and the third heating plate 4 which can locally heat the flow paths 12 (see FIG. 8) is provided on the opposite side of the flow path structure body 1 with a thermal strain generating member 32 interposed therebetween. Deformation of the thin plate 31 due to instantaneous heating of the third heating plate 4 (while heating by the third heating plate 4 is for several milliseconds, a heating effect to the deposition material is, taking thermal conduction into consideration, for several tens milliseconds) may cause the deposition materials in the flow paths 12 to be discharged. The thermal strain generating member 32 may not be provided. The third heating plate 4 is, as will be described below, formed so as to apply a heating effect on an individual flow path 12 even though there are a plurality of the flow paths 12. When such third heating plate 4 is provided, the deposition material can be discharged intermittently from only an intended discharge opening even though the deposition material is not only a melting type but also an ultraviolet-curing resin of about 300-400 nm or a photo-curable resin such as one curable with a visible light of 400 nm or higher. A deposition material such as a photo-curable resin which does not need to be heated can be used as it is without heating the first heating plate 2. For curing such photo-curable resin, an LED 8 is provided near the discharge openings 13. The LED 8 may be one emitting light having a wavelength which can cure the photo-curable resin.

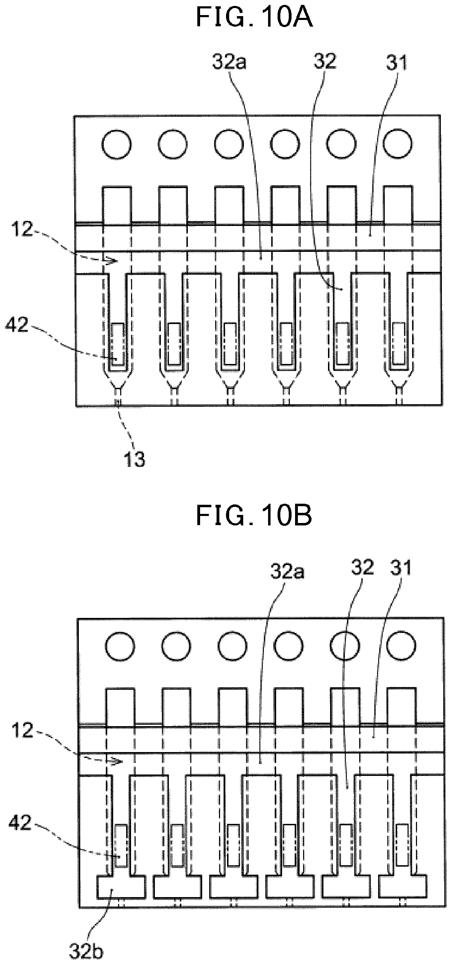

Specifically, the method of forming of a three-dimensional fabricated object of the present invention is characterized in that one surface of the flow paths 12 for discharging the deposition materials is formed by the thin plate 31, the third heating plate 4 is arranged on the opposite side of the flow paths 12 from the thin plate 31, and an instantaneous heating effect is applied on a specific flow path only by the third heating plate 4 so that the deposition material in a specific flow path 12 is discharged. This heating effect is, as will be described below, performed by locally causing a thermal expansion of the deposition material in a specific flow path or a thermal expansion of the thin plate 31 along a specific flow path 12. By providing, between the thin plate 31 and the third heating plate 4, a piece 32 (see FIG. 10A) having a different thermal expansion coefficient from the thin plate 31 or a bimetal and then by causing a thermal strain due to the difference of the thermal expansion coefficients by heating of the third heating plate 4, the thin plate 31 can be deformed.

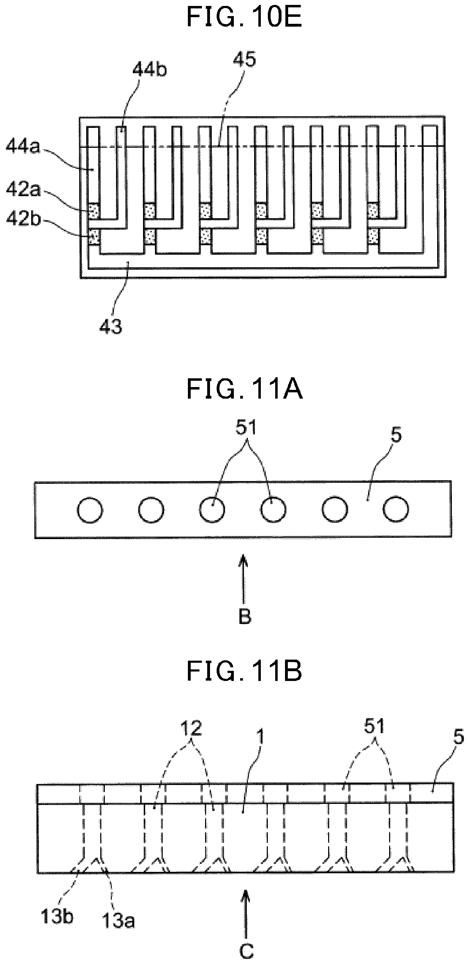

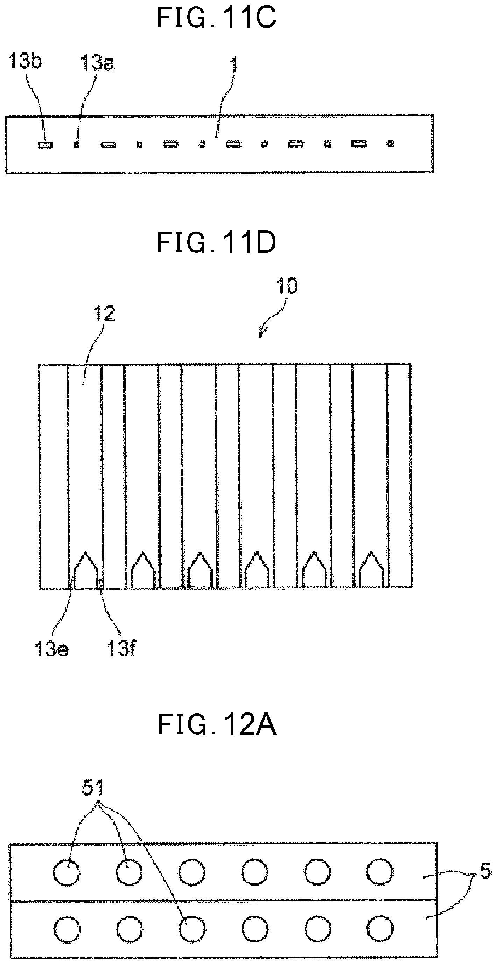

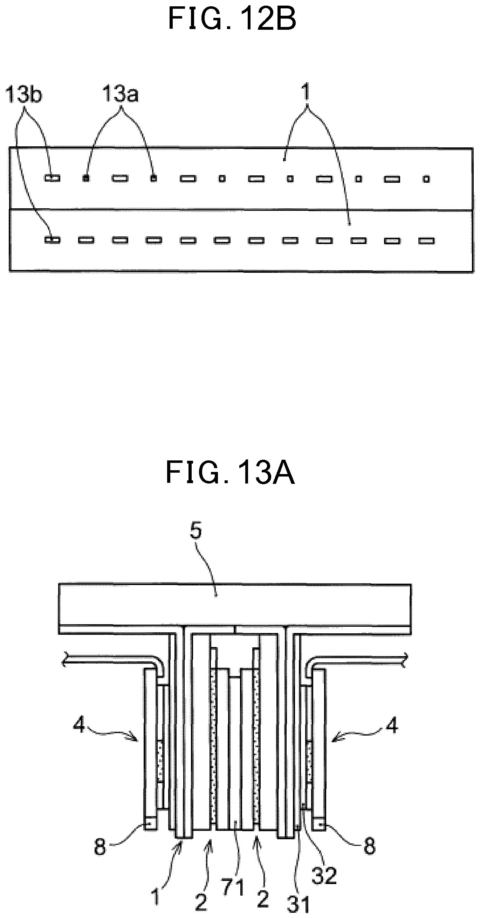

The flow path structure body 1 and attachment thereof to the attaching plate 5, and a configuration of the first heating plate 2 are almost the same as the configurations shown in FIGS. 1A-1C, however, in the flow path structure body 1 shown in FIG. 7A, one example of the plate 10 is shown in FIG. 8, and six flow paths 12 are formed in parallel (while there are six flow paths 12 in FIG. 8, about twelve of them can be formed). Accordingly, six discharge openings 13 are formed in parallel, as shown in the plan view of the side of the discharge openings 13 in FIG. 7B. Therefore, a size C of the plate 10 itself is large, and a width C is determined by the number of the flow paths 12 to be formed, wherein, for example, for twelve flow paths 12 (six in FIG. 8), the width is about 60 mm. A length A of the flow path including the discharge opening 13 and a length B of the attaching portion 16 are the same as in the example shown in FIG. 3, and thus detail description thereof will be omitted. It should be noted that the plates 10a, 10b of the flow path structure body 1 are formed as two plates 10 in FIG. 7A, but that is not an essential difference. There may be three plates and there may be two flow path structure bodies 1 of FIG. 1A. The flow path structure bodies 1 may be formed by four or more plates. In this printhead, a barrel is not provided to the attaching plate 5 and openings 51 (see FIG. 11A and FIG. 12A) leading to the material supply openings 14 are formed on the attaching plate 5.

Specifically, for example, a plurality of the flow paths 12 can be formed, as shown in FIG. 3 and FIG. 8, side by side in a direction perpendicular to an extending direction the flow paths 12. Then, each of the first side wall portions of the plurality of the flow paths 12 is formed by the first heating plate 2, each of the second side wall portions of the plurality of the flow paths is formed by the thin plate 31, the third heating plate 4 is formed to heat only a specific flow path 12 of the plurality of the flow paths 12, and a deposition material is discharged from only the specific flow path 12 by instantaneous heating of the third heating plate 4.

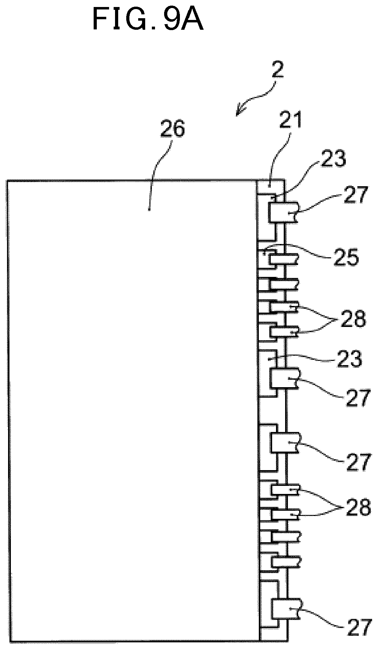

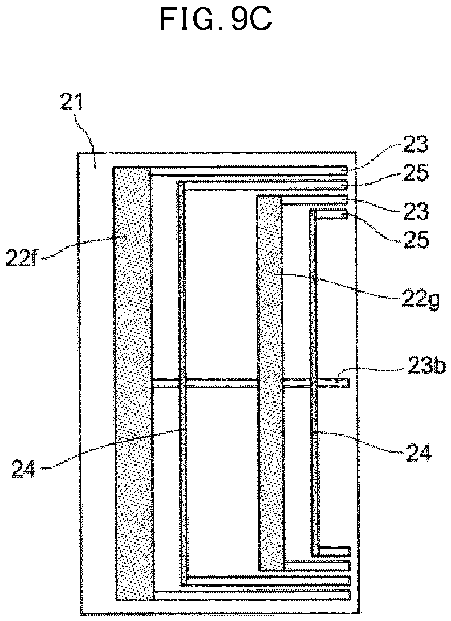

It should be noted that the plates 10 are formed so that the size of the plates 10 is larger than the one in the example shown in FIG. 1A, and accordingly the first heating plate 2 is also larger. Specifically, as shown in FIGs 9A-9C, two first heating plates 2 formed in FIG. 5A and others are formed in one insulating substrate 21. The heating elements 22 and others are respectively the same as in the above-mentioned examples, and thus descriptions thereof will be omitted. It should be noted that in FIG. 9A, the measurement terminals for temperature measurement are all illustrated by 25 alone for clarity of the drawing. FIG. 9C illustrates other configuration of an example of formation of the heating elements 22. The heating elements 22 are formed so as to extent along the longitudinal direction of the insulating substrate 21. It should be noted that, in FIG. 9C, a third heating element 22f having a wide width for a high heat amount is formed on the side of the discharge openings 13, and a fourth heating element 22g having a narrow width for a low heat amount is formed on the opposite side. However, the material and others are the same as in the above-mentioned examples and thus the same parts are assigned with the same figure, and descriptions will be omitted.

It should be noted that, in each of the above-mentioned examples, a temperature of the heating element having a narrower width is higher because the first heating element 22a and the second heating element 22b are connected in series. However, in the example shown in FIG. 9C, each of the third heating element 22f and the fourth heating element 22g are separately connected to a pair of the electrodes 23. Thus, by applying a different voltage, a heating value of the third heating element 22f can be made higher. Specifically, the temperature gradient is such that in the drawing, the temperature of the left end side of the insulating substrate 21 is higher than that of the right end side in the same manner as in the first heating plate 2 shown in FIG. 5A and others. In addition, in this example, a common terminal 23b is formed in the middle of the third heating element 22f and the fourth heating element 22g so that different voltages can be applied to the each half thereof. By doing so, a heat-generating temperature can be controlled according to the flow paths 12 and even when melting temperatures of the deposition materials supplied in the each flow paths are different, the each flow paths 12 can be employed at the same time. This common terminal 23b also serves as a common terminal in the middle of the temperature measurement resistor 24. The shape of the heating elements 22 shown in the FIG. 9C is effective when there are a lot of the flow paths 12 and can easily raise a temperature of the first heating plate 2 on the side of the discharge openings 13.

When there are a plurality of the flow paths 12, the third heating plate 4 provided on the other side of the flow path structure body 1 is configured so as to be capable of heating each of the flow paths 12 respectively by application of a selective pulsed current by an external signal. When a pulsed voltage is applied to a specific flow path 12 by the third heating plate 4, the flow path 12 is heated via the thin plate 31 and the deposition material inside the flow path 12 is expanded. As a result, the deposition material in the flow path 12 is pushed out and discharged from the discharge opening 13 of the flow path 12. Thus, in this example, the thermal strain generating member 32 (3) shown in FIG. 7A is not necessary. In other words, the deposition materials in the flow paths 12 can be discharged by a volume increase of a deposition material in the specific flow path 12 caused by a thermal expansion of the deposition material or the thin plate 31 due to heating of the third heating plate 4 or a volume change of the flow paths 12 caused by an expansion of the thin plate 31.

In this case, when the thin plate 31 is formed of a material having a large thermal expansion coefficient, it is expanded along the flow paths thereof and then the deposition materials can be discharged by a change of the thin plate 31 as in the thermal strain generating member, which will be described below. Also, even though the thermal expansion coefficient of the thin plate 31 is not large, the volume of the deposition material itself is increased when the temperature of the deposition materials is raised. As a result, the deposition materials in the flow paths 12 are pushed toward the discharge openings 13 and discharged from discharge openings 13. In this case as well, when the third heating plate 4 is heated instantly, the expansion occurs instantly, and when the heating action is cancelled, the temperature drops and the volume is reduced to normal. Therefore, in any method, the deposition material is discharged instantly, and subsequently the discharging stops. It should be noted that the deposition materials are supplied from the side of the deposition material supply openings only and the deposition materials being melted in the flow paths 12 or being in a fluid state at room temperature are kept being filled in the flow paths 12. When this deposition material is a filament or a rod-shaped material, it is supplied by a barrel. When the deposition material is a photo-curable resin, although its viscosity can vary depending on its type, any of the types is a fluid, and thus, with the discharge openings 13 being set on the bottom side, the deposition material is filled into the flow paths 12 by the self-weight thereof. When it does not fall by the self-weight, it can be filled in the flow path 12 by applying a pressure. Also, even when it is a resin or a metal having a low melting point, it can fall by the self-weight in the same manner as in a particulate material such as a photo-curable resin, when it is formed into a powder.

On the other hand, as shown in FIG. 7A, the thermal strain generating member 3 (the piece 32 formed of a metal piece or a non-metal piece; see FIG. 10A) may be affixed to the thin plate 31 between the thin plate 31 and the third heating plate 4. This thermal strain generating member 3 is formed by the piece 32 (see FIG. 10A) along each of the flow paths 12, or the like, for example, with a material having a different thermal expansion coefficient from the thin plate 31. When this piece 32 is heated, warpage deformation occurs to the thin plate 31 due to the difference in the thermal expansion coefficient between the thin plate 31 and the piece 32. In this case, a width of the piece 32 is preferably narrower than a width of the flow path because the thin plate 31 is deformed and pierces into the flow path 12 when the thermal expansion coefficient of the piece 32 is larger than the thin plate 31. On the contrary, if the thermal expansion coefficient of the piece 32 is smaller than the thin plate 31, the thin plate 31 is deformed to be pulled outward. Therefore, in this case, the width of the piece 32 is not limited. When the thin plate 31 is deformed into the inside, the deposition material in the flow path 12 is pushed out accordingly. Also, even if the thin plate 31 is pulled outward, because heating by the third heating plate 4 is an instantaneous pulsed heating, the heating stops immediately, and the deformation of the thin plate 31 is reversed. Thus, the volume inside the flow path 12 is increased temporarily and subsequently reduced to normal, and while it is being reduced, the deposition material in the flow path 12 is pushed and discharged from the discharge openings 13. Therefore, the thermal expansion coefficients of the thin plate 31 and the piece 32 need to be different, however, it does not matter which is larger. A bimetal may be affixed directly to the thermal strain generating member 3, as will be described below, even though there is no difference between the thermal strain generating member 3 and the thin plate. Detailed examples of that will be described with reference to FIGS. 10A-10E.

FIG. 10A, shows a configurational example in which the pieces 32 are provided. In FIG. 10A, heaters 42 of the third heating plate 4 are illustrated by two-dot chain lines to show positions thereof. This thin plate 31 is affixed so as to cover one side of each of the plurality of the flow paths 12 of the flow path structure body 1 shown in the above-mentioned FIG. 8. In other words, it is easy and preferable to form the thin plate 31 so that one thin plate 31 closes one side of all of the flow paths 12. This thin plate 31 may be, for example, a metal plate formed of an aluminum alloy sheet having a thickness of about 0.6 mm, a porous ceramic which is easy to be deformed, or a heat-resistant insulating film such as polyethylene and polytetrafluoroethylene. The material is preferably heat-resistant, easy to be deformed, and excellent in heat transferring.

For this thin plate 31, a variety of materials, such as a material having a large thermal expansion coefficient and easy to be deformed or a material having a small thermal expansion coefficient and easy to be deformed, are used in accordance with intended use thereof. Examples of the former materials include a copper alloy such as brass and an aluminum alloy (duralumin) having a thermal expansion coefficient (a coefficient of linear expansion) of 20-30 ppm/°C. Examples of the latter materials include metal plates such as Fe alloys (with different ratios of Fe-Ni-Cr) and stainless steel having a coefficient of linear expansion of about 6 ppm. A non-metal plate may also be used. For this thin plate 31, a material having any thickness of about 0.05-0.6 mm can be used in accordance with its intended use. For example, when the thin plate 31 is formed so as to be deformable by heating along with the pieces 32 as the thermal strain generating member 3, the thin plate 31 and the pieces 32 are affixed together and heated to deform the thin plate 31 by the difference of the thermal expansion coefficients of the thin plate 31 and the pieces 32, and accordingly the deposition material in the flow paths 12 can be discharged. In this case, for the thin plate 31, a material having a thermal expansion coefficient widely different from that of a first piece 32 and easy to be deformed is selected. For example, when the above-mentioned aluminum alloy plate (coefficient of linear expansion: 23 ppm/°C) or copper alloy (coefficient of linear expansion: about 20 ppm/°C) is used for the thin plate 31, a 42 Fe-Ni alloy plate (coefficient of linear expansion: 6 ppm/°C) having a thickness of about 0.1-0.2 mm can be used for the pieces 32. Here, for the plates 10 constituting the flow path structure body 1, a ferroalloy is used. It should be noted that, for example, a bimetal, which will be described below, can be affixed as the thermal strain generating member 3 without employing this thermal expansion coefficient of the thin plate 31. In this case, the thermal expansion coefficient of the thin plate 31 is preferably small. In addition, it may also be possible that, without providing the thermal strain generating member 3, the deposition material in the flow paths 12 is heated and expanded or thermal expansion is caused to the thin plate 31 itself for discharging. In this case, the thin plate 31 is preferably one which is easily deformed largely, and an insulation film or the like may be used. It should be noted that while metals are raised as examples of the thin plate 31 and the pieces 32, materials thereof are not limited to metals, and those other than metals, for example, ceramics used for a ceramic package for semiconductor, a plate of inorganic compound such as a piezoelectric material, quartz glass (coefficient of linear expansion: 0.5 ppm/°C), and the like may be used.

For example, when the flow path 12 has dimensions of 1 mm (width) × 1 mm (depth) × 5 mm (length) = 5 µl = 5,000 nl, the discharge amount (determined by the size of the discharge opening 13) is 0.3 mm × 0.3 mm × 0.05 mm (width) = 0.0045 mm³ = 4.5 nl the coefficient of volumetric expansion of ABS is (6-13) × 10⁻⁵ per 1°C. Therefore, assuming it is 10 × 10⁻⁵, the volume is expanded by 0.1% by 10°C increase (when the temperature of 10% of the inside of the flow path 12 is raised by 100°C, the average temperature rise is 10°C). Therefore, in the case of 5,000 nl x 0.1% = 5 nl, it is larger than the above discharge amount, and for discharging a small amount, just the thermal expansion of the deposition material is enough.

Also, the pieces 32 constituting the thermal strain generating member 3 are formed along each of the flow paths 12, and in the example shown in FIG. 10A, those are coupled together at the root side thereof (opposite from the discharge openings) by a coupling portion 32a and formed in a shape of comb tooth. Because the root side is away from the position of the heaters 42, its temperature is hardly raised. Therefore, there will not be a difference between the thermal expansion coefficients of the pieces 32 and the thin plate 31. On the other hand, although it is laborious to affix the pieces 32 along each of the flow paths 12, with the coupling portion 32a, alignment of the pieces 32 to each of the flow paths 12 becomes very easy. Therefore, the pieces 32 can be affixed after the coupling portion 32a is aligned. What is illustrated in FIG. 10A is that the thin plate 31 is affixed to a surface of the flow path structure body 1, and the pieces 32 are affixed to a surface thereof, wherein positions of the heaters 42 of the third heating plate 4 which are provided thereupon are illustrated by two-dot chain lines. Specifically, the tip side of the pieces 32 is heated. Consequently, temperature increase by the third heating plate 4 is hardly provided on the coupling portion 32a.

The example shown in FIG. 10B is a drawing similar to FIG. 10A and the root side of the pieces 32 are coupled by the coupling portion 32a, and in addition to that, hat portions 32b are formed on the tip side of each of the pieces 32. These hat portions 32b are, without being coupled together, separately formed on each of the pieces 32 along the flow paths 12. When such hat portions 32b are formed, the pieces 32 and the thin plate 31 are more strongly adhered, and peeling is less likely to occur even from a heat cycle. Specifically, a temperature near the heater 42 of the third heating plate 4 is raised, and a stress resulting from the difference between the thermal expansion coefficient is produced. Thus, a peeling force becomes larger. However, the temperature of the hat portions 32b is not raised so much, and thus a stress caused by thermal strain is less likely to be applied. Consequently, the both ends of the pieces 32, where stress tends to be applied, are fixed tightly by the coupling portions 32a and the hat portions 32b. Thus, peeling forces to the pieces 32 are suppressed.

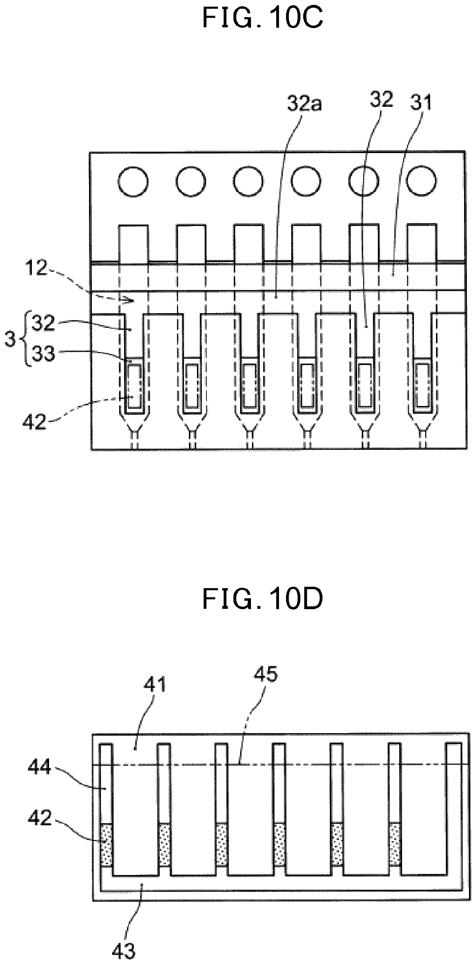

FIG. 10C is an example showing other embodiment of the thermal strain generating member 3. Specifically, in this example, deformation based on the difference between the thermal expansion coefficients of two kinds of materials is formed by the above-mentioned pieces 32 and second pieces 33, without employing the difference between the thermal expansion coefficients of the pieces 32 and the thin plate 31. In this case, a thin organic film such as an insulating film can be used because the thermal expansion coefficient of the thin plate 31 does not matter. In this case, deformation based on difference between thermal expansion coefficients of the pieces 32 and the second pieces 33 occurs. The deformation causes the thin plate 31 to be pushed inward or pulled, thereby discharging the deposition material. In this case, there may be used separated pieces 32, without being coupled by the coupling portions 32a, and a commercially available bimetal can be used. Specifically, the thermal strain generating member 3 is formed of a bimetal formed by bonding at least two kinds of plate materials having different thermal expansion coefficients, and the bimetal can be bonded to the thin plate 31 along the flow paths 12. In this case as well, when the second pieces 33 or the bimetal are affixed in such a way that the thin plate 31 is pulled outward, the bimetal are not limited by the width; however, when the thin plate 31 is deformed in such a way that it pierces into the flow paths 12, a width of the second pieces 33 or bimetal is preferably narrower than a width of the flow paths 12. Also, in this case as well, the second pieces 33 are not limited to metal pieces, but may be non-metal pieces. It should be noted that the thermal strain generating member 3 is not just two kinds of materials having different thermal expansion coefficients and affixed together and is not limited to two kinds of materials having different thermal expansion coefficients. A third plate material having an intermediate thermal expansion coefficient may be interposed between them and enables various deformations.

FIG. 10D is a plan view illustrating one example of the third heating plate 4. Although its detailed drawing is not shown, this third heating plate 4 may be formed in a configuration similar to the above-mentioned first heating plate 2. Specifically, the heaters 42 composed of the heating elements on an insulating substrate 41 similar to the insulating substrate 21 of the first heating plate 2, and on the opposite sides of the heaters 42, a first conducting terminal 43 and second conducting terminals 44 are formed. These first conducting terminal 43 and second conducting terminals 44 are formed by being applied with a material having a low resistivity, as the above-mentioned electrodes 23, measurement terminals 25, and the coupling terminals 27a-27d are. In the example shown in FIG. 10D, the first conducting terminal 43 is formed as a common electrode, coupling each tip of the heaters 42 provided along a plurality of the flow paths 12. And each of the second conducting terminals 44 is derived as an individual terminal, and a signal can be applied to individual flow path 12. It should be noted that, in FIG. 10D, 45 is a formation range of a protective film (which is omitted in FIGS. 7A and 7B as well), which is made of glass or the like, for covering and protecting surfaces of the heaters 42 and the conducting terminals 43, 44. The discharge amount is increased by increasing a voltage applied to the heaters 42. The discharge amount can be also increased when the heating elements (the heaters 42) are formed at two positions and heating is conducted at different timings. Specifically, the third heating plate 4 is, as shown in FIG. 10D, formed so that the heating elements 42 are formed on a second insulating substrate 41 along each flow path 12 of the plurality of the flow paths 12 and cause a heating effect in the specific flow path 12.

In the above example, a single heater 42 is formed; however, as shown in FIG. 10E, the heater (the heating element) 42 is divided into two or more, and a voltage may be applied separately and individually to a first heater 42a and a second heater 42b. Specifically, in FIG. 10E, 44a is a third conducting terminal and 44b is a fourth conducting terminal, wherein, in this example, the fourth conducting terminal 44b is connected to a portion where the first heater 42a and the second heater 42b are connected in series. As a result, when a voltage is applied between the first conducting terminal 43 and the third conducting terminal 44a, this example becomes virtually the same as the example shown in the above-mentioned FIG. 10D. On the other hand, when a voltage is applied between the first conducting terminal 43 and the fourth conducting terminal 44b, only the second heater 42b is heated. Also, when a voltage is applied between the third conducting terminal 44a and the fourth conducting terminal 44b, only the first heater 42a is heated. These voltage applications of the both cases can be conducted at intervals of several milliseconds to several tens milliseconds. By signal voltage application in a manner like this, various controls of the discharge amount can be conducted.

To this third heating plate 4, from the view point of microscopic discharging of the deposition materials to a fabricated object, preferably a pulsed voltage is applied. Although the duration of this pulsed voltage application is very short, about several milliseconds, the temperature of the heaters 42 is raised instantly, its heat is transmitted to the pieces 32, and deformation occurs between the pieces 32 and the thin plate 31 or between the pieces 32 and the second pieces 33. The deformation of the thin plate 31 causes the deposition materials to be discharged from the discharge openings 13. This application of a pulsed voltage is performed in the same manner as in application of each pixel signal in a normal thermal printer (for example, see JP S57-98373 A), by inputting data serially to a shift register, and performing a voltage application to only necessary parts by parallel-out. For controlling a heating amount, a duration of pulse application can be changed by setting a latching circuit between this shift register and an AND circuit.

The flow paths 12 are formed in a plurality of rows as shown in the above-mentioned FIG. 3 so that a line type printhead in which the discharge openings 13 are arranged in parallel rows is obtained as shown in FIG. 1B. However, it is not necessarily that one discharge opening 13 is for one flow path 12. Specifically, as shown in FIG. 11A showing a view seen from the attaching plate 5 introducing the deposition materials on the side opposite to discharge openings, FIG. 11B showing a view seen from a direction of an arrow B of FIG. 11A, and FIG. 11C showing a view seen from an arrow C of FIG. 11B, namely a view seen from the discharge openings 13 (a simplified view without its layer structure), respectively, a small discharge opening 13a and a large discharge opening 13b are formed in a single flow path 12, and a printhead in which the large discharge openings 13b and the small discharge openings 13a are alternatingly and parallelly arranged in line is obtained. The size and shape of these discharge openings 13 are not limited to those of this example. The discharge openings can be formed in a combination of any shapes. It should be noted that a barrel is not attached to the attaching plate 5 as mentioned before, and the openings 51 are formed so as to communicate with the deposition material supply openings 14. The deposition materials can be discharged from the both of the discharge openings 13a, 13b at the same time, or the deposition materials can be discharged from one of them, while the other is closed. The discharge openings 13 may diverge in a configuration such that, as shown in FIG. 11D, the same-size discharge openings 13e, 13f are formed at end portions of both sides of the flow path 12.

As the discharge openings 13 are formed in this manner, a pitch between the discharge openings 13 is narrower, and thus more delicate and refined fabricated object can be manufactured. It should be noted that these discharge openings 13e, 13f may be formed not in a single row but in two or more rows. By increasing the number of the plates 10 of the flow path structure body 1 to be put together, a lot of the discharge openings 13 in more than one row can be formed from a single flow path 12. Thus, when a plurality of the discharge openings 13 are formed to be connected to one of the flow paths 12 as described above, a variation of fabricated objects can be obtained. Also, for this refinement, so-called a shuttle system, in which a printhead is moved by about a half pitch in the x-axis direction, may be adopted. The table for a fabricated (formed) object can be moved in the y-axis and z-axis directions as well. By doing so, one movement in the y-axis direction can stack two layers and possibly three or more layers as well.

FIGS. 12A-12B are examples of the printhead in which two flow path structure bodies 1 shown in FIG. 7A are put together via a heat conductive member or a closing plate, which is not illustrated. The openings of the through-holes constituting these flow paths 12 are respectively closed by the above-mentioned first heating plate 2 and thin plate 31. As a result, a two-row line head is obtained, in which both the openings 51 and the discharge openings 13a, 13b are formed respectively in two rows. For each of the line heads, drawings similar to FIG. 11A and FIG. 11C are shown. In this example, two flow path structure bodies 1 having different formation of the discharge openings 13 are put together. It should be noted that the number of flow path structure bodies 1 to be put together is not limited to two and any number of the flow path structure bodies 1 may be put together. With these configurations, a multiple kinds of deposition materials comprising different materials or a multiple kinds of deposition materials with different colors can be used. In addition, one layer of a multicolored and uneven fabricated material can be formed by a single scan.

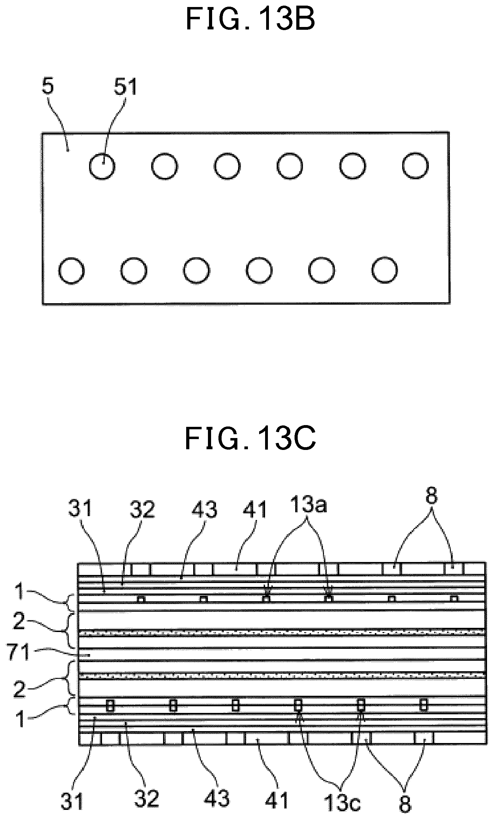

FIG. 13A is an example in which two printheads shown in FIG. 7A are bonded together with a heat insulation plate 71 interposed therebetween so that the sides of the first heating plates 2 face each other. It should be noted that the number of the printheads to be jointed is not limited to two. By doing so, line heads having a plurality of the discharge openings 13 are formed in two lines as shown in a plan view of FIG. 13C seen from the side of the discharge openings 13a, 13c. In the printhead dispensing deposition material, the line heads are formed in two rows, and, in addition, the discharge openings 13 can be different sizes, as shown in FIG. 13C, in the printheads 13a and the printheads 13c. Thus the discharge amount of the deposition material can be changed freely. In addition, because the first heating plates 2 are provided separately in two rows of the line heads, each of the line heads can have different melting points. Thus different deposition materials can be melted in accordance with materials thereof. More kinds of various fabricated object can be manufactured in a short time. Of course, in the two rows, the sizes of the discharge openings 13a, 13c may be further changed, or the first heating plate 2 may be used with an ultraviolet-curing resin, without being heated. In FIG. 13A, 8 is an LED for curing the ultraviolet-curing resin.

FIG. 13B is a plan view seen from the side of the attaching plate 5. As is evident from FIG. 13B and FIG. 13C, the two rows of the line heads may be formed so that positions of the flow paths are shifted by a half pitch. The discharge openings 13 are also formed to be shifted by a half pitch. When a plurality of rows of the line heads are formed and there is a combination of rows shifted by a half pitch, lacking of the deposition material between the pitches is prevented, and a highly precise fabricated object can be manufactured. With these configurations, a multiple kinds of deposition materials comprising different materials or a multiple kinds of deposition materials with different colors can be used. In addition, two or more layers of a multicolored and uneven fabricated material can be formed by a single scan. In this case, too, as in the cases of the above-mentioned FIG. 11C and FIG. 11D, the number of discharge openings 13 can be increased, and the discharge openings 13 do not need to be aligned in a single row. Also, the discharge openings 13 do not need to be shifted by a half pitch. It should be noted that, in FIG. 13B, 5 is an attaching plate, and 51 are openings leading to the material supply openings. Also, when the discharge openings 13 are formed in a plurality of rows in this manner, positions of the discharge openings 13 in the vertical direction can be easily changed depending on the rows. Two pairs of the printheads can be obtained just by bonding them together to be shifted each other. By shifting, for example, by about 1 mm in the vertical direction, two or more layers of a fabricated object can be formed by a single scan, and thus the fabricated object can be manufactured faster.

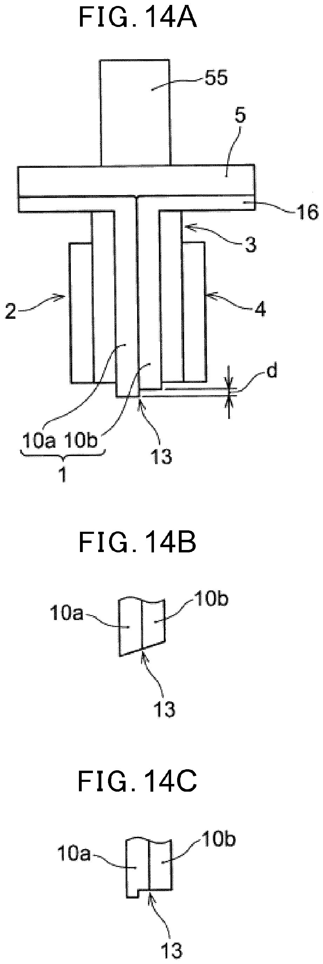

Also, when there are a lot of the flow paths 12 and a plurality of the discharge openings 13 are formed in line as in the manner mentioned above, even a multicolor-type fabricated object or the like can be manufactured easily. In addition, it is also easier for a base resin and a curative agent to be discharged separately and mixed together. As shown in FIG. 14A where a similar drawing of the printhead to FIG. 7A is shown in a schematic drawing, at a tip of the flow path structure body 1 on the side of the discharge openings 13, a position shift is formed in a direction the flow paths 12 extend and a level difference "d" may be formed there. The level difference is formed by changing the lengths of the two plates 10a, 10b. This level difference may be formed by bonding the plates so that the flow path structure body 1 has two level differences. Also, even though the flow path structure body 1 does not have a level difference, two or more printheads may be used being put together so that there is a level difference at the discharge openings at the tip. Specifically, the discharge openings are arranged in a plurality of rows in a direction intersecting with the fabrication table, wherein vertical heights of the rows of the discharge openings are different in at least two rows of the plurality of the rows, and at least two layers of a fabricated object can be formed by a single scan in the x-y direction of the fabrication table provided below the rows of the discharge openings.

When the height of a discharged deposition material is about 1 mm, the level difference "d" is, for example, set to be about 1 mm and the fabricated object is scanned from a direction of the plate 10a which is longer in a scan direction of the fabrication table to a direction of the plate 10b which is shorter in the scan direction so that the discharged deposition material is not be shaved by the printheads even when the deposition material is discharged continuously. As a result, a finely made fabricated object can be formed. On the contrary, the level difference can be formed so as to shave off a top of the discharged deposition material. By doing so, a finely made fabricated object with a flat surface can be formed. The purpose of making such a shape is to make the surface flat to enable the next layer to be adhered easily, and make the material to be discharged and adhered easily when changing characteristics, viscosity, and the like of the material. The purpose of making such a shape also allows for a certain degree of processing of the printed object, such as maintaining a constant thickness of the printed object, maintaining constant intervals between dents, and the like.

Also, instead of the level difference, as shown in FIG. 14B, two plates 10a, 10b may be configured to be cut in an inclined direction. That also prevents breaking of the deposition material discharged in a similar manner by the printhead. It should be noted that in FIGS. 14B and 14C, only the part of the discharge opening is shown. Furthermore, in the example shown in FIG. 14C, the level difference is not formed between the two plates 10a, 10b, but about a half of a thickness of the one plate 10a and the entire surface of another plate 10b are dented. When a large amount of the deposition material is discharged, an enough room is secured for spreading of the discharged deposition material. It should be noted that, in FIG. 14A, 55 is a cylindrical member for keeping deposition materials for neighboring flow paths from mixing together. Also, the first heating plate 2, the third heating plate 4, and others are conceptionally shown.

In addition, although it is not shown, the tip of the printhead may be scanned relative to the fabricated object while the printhead is discharging the deposition material in a state of the tip of the printhead being inclined to the fabricated object without facing the fabricated object at a right angle. By doing so, even when the deposition material is discharged continuously, the same effect can be obtained as in the case where the above-mentioned level difference is formed, or the tip is cut in an inclined direction. A thick, fabricated object becomes easier to be obtained. In other words, by changing the shape of the tip of printhead or adjusting the setting angle in accordance with the shape of the fabricated object, even a thick, fabricated object can be formed efficiently.

According to these embodiments, because the deposition material can be suitably discharged from a specific discharge opening 13 of a plurality of the discharge openings 13 by the heating plate 4, for example, while the fabrication table is being scanned, the deposition material can be discharged only on a particular spot on the fabricated object. Also, when a plurality of the discharge openings are formed, two or more spots of the fabricated object can be formed at the same time. In addition, when a plurality of the discharge openings are formed, the discharge amount can be changed by changing the size of the discharge openings. Furthermore, deposition materials of various colors can be discharged. Specifically, the deposition materials can be mixed after being discharged, or deposition materials comprising various colors and materials mixed in advance are prepared so that desired deposition materials are discharged on desirable spots respectively from different discharge openings. As a result, even a large fabricated object can be manufactured freely in a short time.

Also, when a plurality of the printheads having a plurality of the discharge openings formed in line are placed side by side, the number of the discharge openings are further increased, and fabricated objects can be formed at a lot of positions at one time by a single scan. With this configuration, when a resin comprising two liquids are used, a base resin is discharged from the discharge openings of the first row and a curing agent is discharged from the discharge openings of the next row, thereby making it possible to perform reactive curing. In addition, when the discharge openings of a plurality of rows of the printheads are shifted per row in a vertical direction, first, the deposition material is discharged by heads having lower-position discharge openings, and then the deposition material is discharged by a row of the higher-position discharge openings in the same scanning process so that two or more layers of the fabricated objects can be formed by a single scan. Thus, even a large, fabricated object can be formed in a very short time.

When thermal gradient is formed so that the temperature of the first heating plate 2 is higher on the side of the discharge openings 13 than the side of the supply openings side, the deposition material on the side of the discharge openings 13 remains in a state of being melted. Therefore, when a push force is applied to the deposition material due to the deformation of the thin plate into the flow paths 12 or the thermal expansion of the deposition material, the deposition material is likely to be pushed toward the side of the discharge openings 13.

According to the method of the present invention for discharging the deposition material by deformation of the thin plate by the thermal strain generating member or for discharging the deposition material by temperature increase of the deposition material in the flow paths, discharging of the deposition material can be controlled instantaneously, and thus the deposition material can be discharged while the fabrication table is being scanned; therefore, even a large, fabricated object can be manufactured very easily.

In addition, according to the method of the present invention for discharging the deposition material in which the deposition material can be discharged by changing the height of the discharge openings in each of the heads of a plurality of rows in line, two or more layers of a fabricated object can be formed by a single scan, and thus even a large, fabricated object can be formed in a short time. It should be noted that the thickness of each layer can be changed as well.

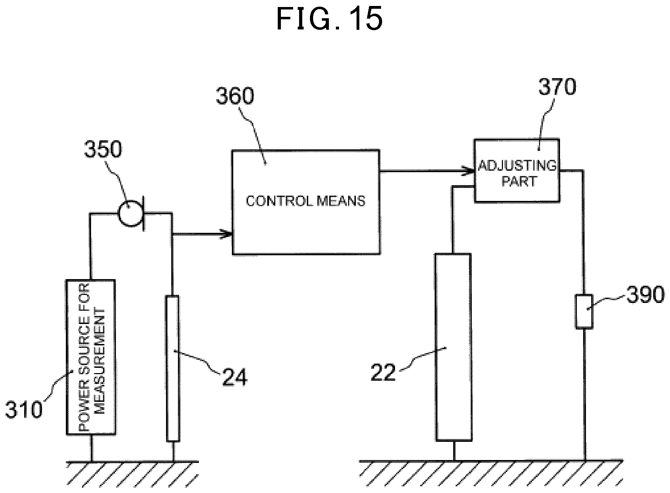

In FIG. 15, a temperature control means (a drive circuit) of the printhead shown in FIG. 1A and others is shown. Specifically, this drive circuit is an example of driving by a DC or AC power source 390, wherein power source 390 is connected to the electrodes 23 (see FIG. 5A) via an adjusting part 370 for adjusting applied electric power, so that driving power is supplied to the heating element 22. Applied electric power is adjusted by transformer controlling voltage and its supplied time of battery, commercial power source, or commercial power source 390. As a result, an AC power source also can be used as it is, and a voltage supplied by a commercial AC power source 390 is adjusted by the electric power adjusting part 370 so that a desirable temperature is obtained. As a result, neither a DC power source nor a fan for cooling a power source is needed. However, a DC power source by a battery may be used. In addition, although it is not illustrated, heating may be conducted by pulse drive applying a pulse. In that case, the applied electric power can be adjusted by changing its duty cycle besides changing its voltage. The temperature of the heating element is obtained from a resistance value of the temperature measurement resistor 24 obtained by measuring a constant electric current supplied from a power source for measurement 310 through a constant current circuit 350 and voltages V at the both ends of the temperature measurement resistor 24, using the temperature measurement resistor 24. By using a change in the resistance value, a temperature of the temperature measurement resistor 24, namely, a temperature of the insulating substrate 21 (see FIG. 1A) is measured, and by using the temperature, an applied voltage and the like can be adjusted at the electricity adjusting part 370. In the adjusting part 370, especially when a plurality of the heating elements 22 are placed side by side and heated, a temperature of each of the plurality of the heating elements 22 is made uniform. The adjusting part 370 is also effective for a plurality of the heating elements 22 to have different temperatures. Therefore, when a plurality of the temperature measurement resistors 24 is provided, it is preferable that neighboring temperatures thereof are measured individually, and an applied voltage and others are adjusted in each of the heating elements 22.

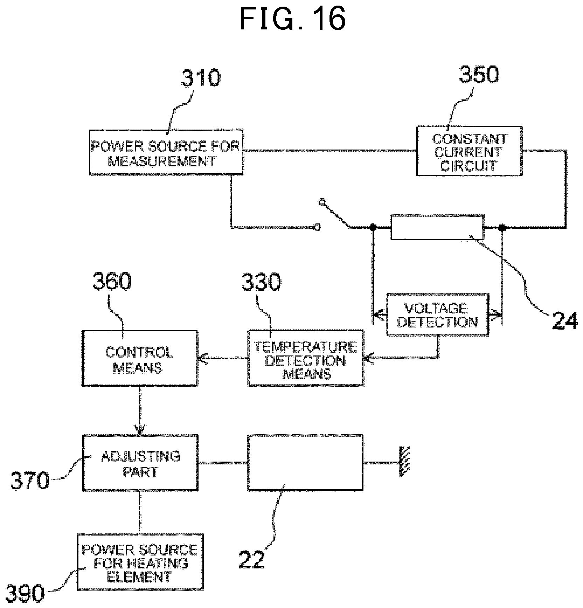

The principle of this temperature measurement will be described with reference to more detailed FIG. 16. A constant current circuit CCR (current controlled regulator) 350 is connected with the temperature measurement resistor 24 in series at the both ends of the power source for measurement 310 of, for example, a DC power source. Voltages V at the both ends of the temperature measurement resistor 24 are measured, and the voltages are divided by a constant current with a temperature detection means 330 to obtain a resistance value of the temperature measurement resistor 24 at that point of time. The temperature is calculated from the resistance value and a temperature coefficient of the temperature measurement resistor 24 (determined by the material thereof) which is known in advance. An electric power applied to the both ends of the heating element 22 from the adjusting part 370 is controlled by the control means 360 in accordance with the detected temperature so that the insulating substrate 21 is kept at a predetermined temperature. For the temperature control of the heating element 22 by the control means 360, a voltage is applied in pulses and then the duty cycle of the pulses may be changed, or the voltage itself may be changed. In the example shown in FIG. 16, the constant current circuit is provided. However, instead of the constant current circuit, a reference resistance may be provided at a position where the temperature is constant, and a voltage of the reference resistance is measured so that the electric current is calculated, and the voltages at the both ends of the temperature measurement resistor 22 are measured. Also, the power source for temperature measurement 310 is not necessarily a DC power source. A constant current can be obtained in a pulse-like manner even with an AC power source.

### Explanation of Symbols

- 1: Flow path structure body
- 2: First heating plate
- 3: Thermal strain generating member
- 4: Third heating plate
- 5: Attaching plate
- 6: Barrel
- 7: Closing plate
- 8: LED
- 9: Assembly plate
- 10: Plate
- 12: Flow path
- 13: Discharge opening
- 14: Material supply opening
- 15: Groove
- 16: Attaching portion
- 21: Insulating substrate
- 22: Heating element
- 22a: Linear heating element (first heating element)
- 22b: Second heating element
- 23: Electrode
- 24: Temperature measurement resistor
- 25a-25d: Measurement terminals
- 25e: Temperature measurement lead
- 26: Cover substrate
- 27: Lead for heating element
- 28: Temperature measurement lead
- 27a-27d: Coupling conductors
- 55: Cylindrical member
- 71: Heat insulation plate

## Claims

1. A printhead dispensing a deposition material for three-dimensional fabrication comprising:
a first heating plate (2) constituting a first side wall portion (121) being a part of a side wall of a flow path (12) for flowing a deposition material, and heating the deposition material in the flow path;
a closing plate (7) or a second heating plate constituting a second side wall portion (122), the second side wall portion being a part of the side wall of the flow path other than the first side wall portion;
a flow path structure body (1), the flow path structure body comprising a plurality of plates (10) having a through-hole (12a) of almost the same shape respectively, and the plurality of plates being bonded together so as to form a third side wall portion (123) with peripheral walls of the through-holes, the third side wall portion being a part of the side wall of the flow path (12) other than the first side wall portion (121) and the second side wall portion (122);
a discharge opening (13) communicating with the flow path and formed on one tip of the flow path; and
a material supply opening (14) communicating with the flow path and formed on another tip of the flow path;
wherein one end side of the through-hole (12a) is closed by the first heating plate (2), and another end side of the through-hole (12a) is closed by the closing plate (7) or the second heating plate, thereby the flow path (12) being formed.

2. The printhead of claim 1, wherein a groove having a concave sectional shape is formed at a portion of the first heating plate (2), and the closing plate (7) or the second heating plate is provided to close an opening of the concave groove so that the flow path (12) is formed.

3. The printhead of claim 1 or 2, wherein the closing plate is formed by a thin plate (31), and a third heating plate (4) is further provided on a side opposite to the flow path (12) based on the thin plate (31), the third heating plate (4) applying a heating effect on the deposition material in the flow path (12),
wherein the deposition material in the flow path is discharged by instantaneous heating of the third heating plate (4).

4. The printhead of claim 3, wherein a plurality of the flow paths (12) are formed side by side in a direction perpendicular to an extending direction of the flow path,
each of the first side wall portions (121) of the plurality of the flow paths (12) is formed by the first heating plate (2),
each of the second side wall portions (122) of the plurality of the flow paths (12) is formed by the thin plate (31),
the third heating plate (4) is formed to heat only a specific flow path of the plurality of the flow paths, and
a deposition material is discharged from only the specific flow path by instantaneous heating of the third heating plate (4).

5. The printhead of claim 1, wherein a recess communicating with the through-holes (12a) is formed on at least one of the plurality of plates (10) of the flow path structure body so that the discharge opening (13) is formed.

6. The printhead of claim 1, wherein a plurality of the flow path structure bodies (1) are lapped with a heat conductive member or a closing plate (7) being disposed therebetween, and the first heating plate (2) or a thin plate (31) is bonded to the both outer side surfaces of the plurality of the flow path structure bodies.

7. The printhead of claim 1, wherein first and second printheads dispensing a deposition material are bonded with a heat resistance plate (71) interposed so as to face to the first heat plate each other, each of the first and second printheads comprising the flow path structure body (1), the first heating plate (2) formed on one surface side of the flow path structure body (1), and a third heating plate (4) formed on the other surface side of the flow path structure body (1) with a thin plate interposed, thereby having a plurality of rows of discharge openings (13) so as to be aligned with discharge openings in the same direction.

8. The printhead of claim 7, wherein each of the flow path structure bodies (1) has a plurality of discharge openings (13) in line, and
wherein each row of the discharge openings (13) of the plurality of the flow path structure bodies (1) is positioned in a different height in an extending direction of the flow path (12).

9. A method of forming of a three-dimensional fabricated object using the printhead of claim 3, the method comprising:
fabricating a fabricated object while discharging a deposition material of a specific flow path by applying an instantaneous heating effect only to the specific flow path with the third heating plate (4).

## Patentansprüche

1. Druckkopf, der ein Abscheidungsmaterial für eine dreidimensionale Fertigung abgibt, umfassend:
eine erste Heizplatte (2), die einen ersten Seitenwandabschnitt (121) darstellt, der ein Teil einer Seitenwand eines Strömungspfads (12) zum Strömenlassen eines Abscheidungsmaterials ist, und das Abscheidungsmaterial in dem Strömungspfad erwärmt;
eine Verschlussplatte (7) oder eine zweite Heizplatte, die einen zweiten Seitenwandabschnitt (122) darstellt, wobei der zweite Seitenwandabschnitt ein anderer Teil der Seitenwand des Strömungspfads als der erste Seitenwandabschnitt ist;
einen Strömungspfadstrukturkörper (1), wobei der Strömungspfadstrukturkörper eine Vielzahl von Platten (10) umfasst, die ein Durchgangsloch (12a) von jeweils fast der gleichen Form aufweisen, und die Vielzahl von Platten miteinander so verbunden sind, dass sie einen dritten Seitenwandabschnitt (123) mit Umfangswänden der Durchgangslöcher bilden, wobei der dritte Seitenwandabschnitt ein anderer Teil der Seitenwand des Strömungspfads (12) als der erste Seitenwandabschnitt (121) und der zweite Seitenwandabschnitt (122) ist;
eine Abführöffnung (13), die mit dem Strömungspfad kommuniziert und an einer Spitze des Strömungspfads gebildet ist; und
eine Materialzuführöffnung (14), die mit dem Strömungspfad kommuniziert und an einer anderen Spitze des Strömungspfads gebildet ist;
wobei eine Endseite des Durchgangslochs (12a) durch die erste Heizplatte (2) geschlossen ist, und eine andere Endseite des Durchgangslochs (12a) durch die Verschlussplatte (7) oder die zweite Heizplatte geschlossen ist, wodurch der Strömungspfad (12) gebildet wird.

2. Druckkopf nach Anspruch 1, wobei eine Nut, die eine konkave Schnittform aufweist, an einem Abschnitt der ersten Heizplatte (2) gebildet ist, und die Verschlussplatte (7) oder die zweite Heizplatte vorgesehen ist, um eine Öffnung der konkaven Nut zu schließen, so dass der Strömungspfad (12) gebildet wird.

3. Druckkopf nach Anspruch 1 oder 2, wobei die Verschlussplatte durch eine dünne Platte (31) gebildet ist, und eine dritte Heizplatte (4) ferner an einer Seite entgegengesetzt zu dem Strömungspfad (12) basierend auf der dünnen Platte (31) vorgesehen ist, wobei die dritte Heizplatte (4) einen Heizeffekt auf das Abscheidungsmaterial in dem Strömungspfad (12) ausübt,
wobei das Abscheidungsmaterial in dem Strömungspfad durch augenblickliches Erwärmen der dritten Heizplatte (4) abgeführt wird.

4. Druckkopf nach Anspruch 3, wobei eine Vielzahl der Strömungspfade (12) nebeneinander in einer Richtung senkrecht zu einer Erstreckungsrichtung des Strömungspfads gebildet sind,
jeder der ersten Seitenwandabschnitte (121) der Vielzahl der Strömungspfade (12) durch die erste Heizplatte (2) gebildet ist,
jeder der zweiten Seitenwandabschnitte (122) der Vielzahl der Strömungspfade (12) durch die dünne Platte (31) gebildet ist,
die dritte Heizplatte (4) gebildet ist, um nur einen spezifischen Strömungspfad der Vielzahl von Strömungspfaden zu erwärmen, und
ein Abscheidungsmaterial von nur dem spezifischen Strömungspfad durch augenblickliches Erwärmen der dritten Heizplatte (4) abgeleitet wird.

5. Druckkopf nach Anspruch 1, wobei eine Aussparung, die mit den Durchgangslöchern (12a) kommuniziert, an wenigstens einer der Vielzahl von Platten (10) des Strömungspfadstrukturkörpers gebildet ist, so dass die Abführöffnung (13) gebildet wird.

6. Druckkopf nach Anspruch 1, wobei eine Vielzahl der Strömungspfadstrukturkörper (1) mit einem wärmeleitenden Element oder einer Verschlussplatte (7), das/die dazwischen angeordnet ist, überlappt sind, und die erste Heizplatte (2) oder eine dünne Platte (31) mit den beiden äußeren Seitenoberflächen der Vielzahl der Strömungspfadstrukturkörper verbunden ist.

7. Druckkopf nach Anspruch 1, wobei erste und zweite Druckköpfe, die ein Abscheidungsmaterial abgeben, mit einer Wärmebeständigkeitsplatte (71) verbunden sind, die dazwischen angeordnet ist, so dass die ersten Heizplatten (2) einander zugewandt sind, wobei jeder der ersten und zweiten Druckköpfe den Strömungspfadstrukturkörper (1) umfasst, die erste Heizplatte (2) an einer Oberflächenseite des Strömungspfadstrukturkörpers (1) gebildet ist, und eine dritte Heizplatte (4) an der anderen Oberflächenseite des Strömungspfadstrukturkörpers (1) gebildet ist, wobei eine dünne Platte dazwischen positioniert ist, wobei er eine Vielzahl von Reihen von Abführöffnungen (13) aufweist, die mit Abführöffnungen in der gleichen Richtung ausgerichtet sind.

8. Druckkopf nach Anspruch 7, wobei jeder der Strömungspfadstrukturkörper (1) eine Vielzahl von Abführöffnungen (13) in einer Reihe aufweist, und
wobei jede Reihe der Abführöffnungen (13) der Vielzahl der Strömungspfadstrukturkörper (1) in einer unterschiedlichen Höhe in einer Erstreckungsrichtung des Strömungspfads (12) positioniert ist.

9. Verfahren zum Bilden eines dreidimensionalen gefertigten Objekts unter Verwendung des Druckkopfs nach Anspruch 3, wobei das Verfahren umfasst:
Fertigen eines gefertigten Objekts während eines Abführens eines Abscheidungsmaterials eines spezifischen Strömungswegs durch Ausüben eines augenblicklichen Heizeffekts nur auf den spezifischen Strömungspfad mit der dritten Heizplatte (4).

## Revendications

1. Tête d'impression distribuant un matériau de dépôt pour une fabrication tridimensionnelle, comprenant :
une première plaque chauffante (2) constituant une première partie de paroi latérale (121) faisant partie d'une paroi latérale d'un trajet d'écoulement (12) pour l'écoulement d'un matériau de dépôt, et chauffant le matériau de dépôt dans le trajet d'écoulement ;
une plaque de fermeture (7) ou une deuxième plaque chauffante constituant une seconde partie de paroi latérale (122), la seconde partie de paroi latérale faisant partie de la paroi latérale du trajet d'écoulement autre que la première partie de paroi latérale ;
un corps de structure de trajet d'écoulement (1), le corps de structure de trajet d'écoulement comprenant une pluralité de plaques (10) présentant un trou traversant (12a) ayant presque la même forme, respectivement, et la pluralité de plaques étant liées entre elles de manière à former une troisième partie de paroi latérale (123) avec des parois périphériques des trous traversants, la troisième partie de paroi latérale faisant partie de la paroi latérale du trajet d'écoulement (12) autre que la première partie de paroi latérale (121) et la seconde partie de paroi latérale (122) ;
une ouverture d'évacuation (13) communiquant avec le trajet d'écoulement formé sur une extrémité du trajet d'écoulement ; et
une ouverture d'alimentation en matériau (14) communiquant avec le trajet d'écoulement et formée sur une autre extrémité du trajet d'écoulement ;
dans laquelle un côté d'extrémité du trou traversant (12a) est fermé par la première plaque chauffante (2), et un autre côté d'extrémité du trou traversant (12a) est fermé par la plaque de fermeture (7) ou la deuxième plaque chauffante, le trajet d'écoulement (12) étant formé de la sorte.

2. Tête d'impression selon la revendication 1, dans laquelle une rainure présentant une forme de section transversale concave est formée au niveau d'une partie de la première plaque chauffante (2), et la plaque de fermeture (7) ou la deuxième plaque chauffante est prévue pour fermer une ouverture de la rainure concave de sorte que le trajet d'écoulement (12) soit formé.

3. Tête d'impression selon la revendication 1 ou 2, dans laquelle la plaque de fermeture est formée par une plaque mince (31), et une troisième plaque chauffante (4) est en outre prévue sur un côté opposé au trajet d'écoulement (12) sur la base de la plaque mince (31), la troisième plaque chauffante (4) appliquant un effet de chauffage sur le matériau de dépôt dans le trajet d'écoulement (12),
dans laquelle le matériau de dépôt dans le trajet d'écoulement est déchargé par chauffage instantané de la troisième plaque chauffante (4).

4. Tête d'impression selon la revendication 3, dans laquelle une pluralité de trajets d'écoulement (12) sont formés côte à côte dans une direction perpendiculaire à une direction d'extension du trajet d'écoulement,
chacune des premières parties de paroi latérale (121) de la pluralité des trajets d'écoulement (12) est formée par la première plaque chauffante (2),
chacune des secondes parties de paroi latérale (122) de la pluralité des trajets d'écoulement (12) est formée par la plaque mince (31),
la troisième plaque chauffante (4) est formée pour chauffer uniquement un trajet d'écoulement spécifique de la pluralité de trajets d'écoulement, et
un matériau de dépôt est déchargé uniquement à partir du trajet d'écoulement spécifique par chauffage instantané de la troisième plaque chauffante (4).

5. Tête d'impression selon la revendication 1, dans laquelle un évidement communiquant avec les trous traversants (12a) est formé sur au moins l'une de la pluralité de plaques (10) du corps de structure de trajet d'écoulement de sorte que l'ouverture de décharge (13) est formée.

6. Tête d'impression selon la revendication 1, dans laquelle une pluralité de corps de structure de trajet d'écoulement (1) sont recouverts d'un élément conducteur de chaleur ou d'une plaque de fermeture (7) disposée entre eux, et la première plaque chauffante (2) ou une plaque mince (31) est liée aux deux surfaces latérales extérieures de la pluralité de corps de structure de trajet d'écoulement.

7. Tête d'impression selon la revendication 1, dans laquelle des première et seconde têtes d'impression distribuant un matériau de dépôt sont liées à une plaque de résistance à la chaleur (71) interposée de manière à faire face à la première plaque chauffante l'une par rapport à l'autre, chacune des première et seconde têtes d'impression comprenant le corps de structure de trajet d'écoulement (1), la première plaque chauffante (2) formée sur un premier côté de surface du corps de structure de trajet d'écoulement (1), et une troisième plaque chauffante (4) formée sur l'autre côté de surface du corps de structure de trajet d'écoulement (1) avec une plaque mince interposée, en présentant ainsi une pluralité de rangées d'ouvertures de décharge (13) de manière à ce qu'elles soient alignées avec des ouvertures de décharge dans la même direction.

8. Tête d'impression selon la revendication 7, dans laquelle chacun des corps de structure de trajet d'écoulement (1) présente une pluralité d'ouvertures de décharge (13) alignées, et
dans laquelle chaque rangée des ouvertures de décharge (13) de la pluralité de corps de structure de trajet d'écoulement (1) est positionnée à une hauteur différente dans une direction d'extension du trajet d'écoulement (12).

9. Procédé de formage d'un objet fabriqué en trois dimensions en utilisant la tête d'impression selon la revendication 3, le procédé comprenant l'étape consistant à :
fabriquer un objet fabriqué tout en déchargeant un matériau de dépôt d'un trajet d'écoulement spécifique en appliquant un effet de chauffage instantané uniquement sur le trajet d'écoulement spécifique avec la troisième plaque chauffante (4).
